(19) **Europäisches Patentamt**
**European Patent Office**
**Office européen des brevets**

(11) **EP 2 263 303 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(21) Anmeldenummer: **09729032.4**

(22) Anmeldetag: **16.03.2009**

(51) Int Cl.:
***H02M 7/5387*** *(2007.01)*

(86) Internationale Anmeldenummer:
**PCT/EP2009/001924**

(87) Internationale Veröffentlichungsnummer:
**WO 2009/121475 (08.10.2009 Gazette 2009/41)**

(54) **UMRICHTER UND VEFAHREN ZUR BESTIMMUNG EINES STROMRAUMZEIGERS**

CONVERTER AND METHOD FOR DETERMINING A CURRENT SPACE VECTOR

CONVERTISSEUR ET PROCEDE POUR DETERMINER UN INDICATEUR SPATIAL DE COURANT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **04.04.2008 DE 102008017642**

(43) Veröffentlichungstag der Anmeldung:
**22.12.2010 Patentblatt 2010/51**

(73) Patentinhaber: **SEW-EURODRIVE GmbH & Co. KG 76646 Bruchsal (DE)**

(72) Erfinder:
• **WOLF, Harald**
 **76698 Ubstadt-Weiher (DE)**
• **HEIL, Manuel**
 **76287 Rheinstetten (DE)**

(56) Entgegenhaltungen:
**WO-A2-03/041256     WO-A2-2009/127313**
**GB-A- 2 437 696**

**Beschreibung**

Die Erfindung betrifft einen Umrichter und ein Verfahren zur Bestimmung eines Stromraumzeigers.

Bei einem ausgangsspannungsseitig pulsweitenmoduliert betriebenen Umrichter mit digitaler Regelung ist es zur Erreichung einer ausreichenden Regelgüte erforderlich, für eine Pulsweitenmodulationsperiode einen Wert für denjenigen Stromraumzeiger zu bestimmen, welcher dem über diese Pulsweitenmodulationsperiode gebildeten Mittelwert des real vorhandenen Stromraumzeigers entspricht. Die pulsweitenmodulierte Ausgangsspannung hat bei induktiver Last, wie insbesondere bei einem Elektromotor, einen sogenannten Stromripple zur Folge. Die Bestimmung des Stromraumzeigers muss unbeeinflusst von diesem Stromripple erfolgen. Bei manchen Umrichtern des Standes der Technik sind die Stromsensoren in den Zuleitungen zum Motor angeordnet, wodurch kontinuierliche Stromsignale auftreten, die durch analoge Filterung vom Stromripple befreit werden und dann für die Regelung verwendbar sind .

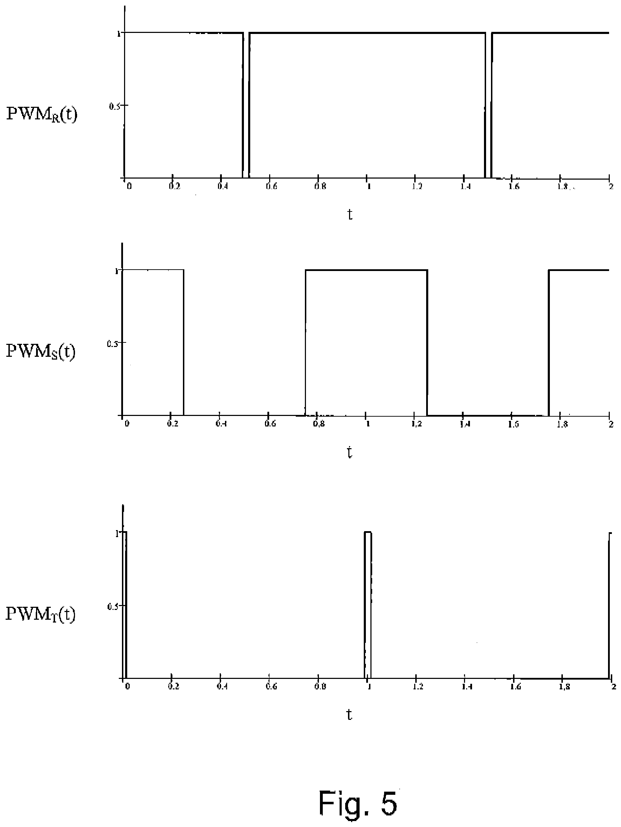

Aus dem Buch ,Praxis der feldorientierten Drehstromantriebsregelungen' von Nguyen Phung Quang und Jörg-Andreas Dittrich, zweite Auflage, aus dem Jahre 1999 sind aus Seite 110-113 pulsweitenmoduliert betreibbare Umrichter bekannt, bei denen Stromerfassungen mit Hilfe von drei (Abb. 5.1) oder auch nur zwei (Abb.5.3, 5.5, 5.6, 5.9, 5.11) potentialtrennenden Stromfühlern in den Ausgangszweigen vorgesehen sind. Aus den Strommesswerten wird dabei ein Stromraumzeiger mit zwei Freiheitsgraden bestimmt (Abb. 5.3, 5.5, 5.6, 5.9, 5.11). Weiter ist auf der Seite 76 bis 77 ausgeführt, dass zur Erfassung der Grundschwingung der Motorströme ohne Oberschwingungen, also ohne Stromripple, zu geeigneten Zeitpunkten die Strommesswerte zu erfassen sind. Dabei bezeichnet man die Abweichung von der Grundschwingung als Differenzstromraumzeiger. Die Erfassung der Strommesswerte erfolgt dann im Nulldurchgang des Differenzstromraumzeigers. Von Nachteil ist bei diesen bekannten Umrichtern, dass mindestens zwei kostspielige, potentialtrennende Strommessmittel notwendig sind.

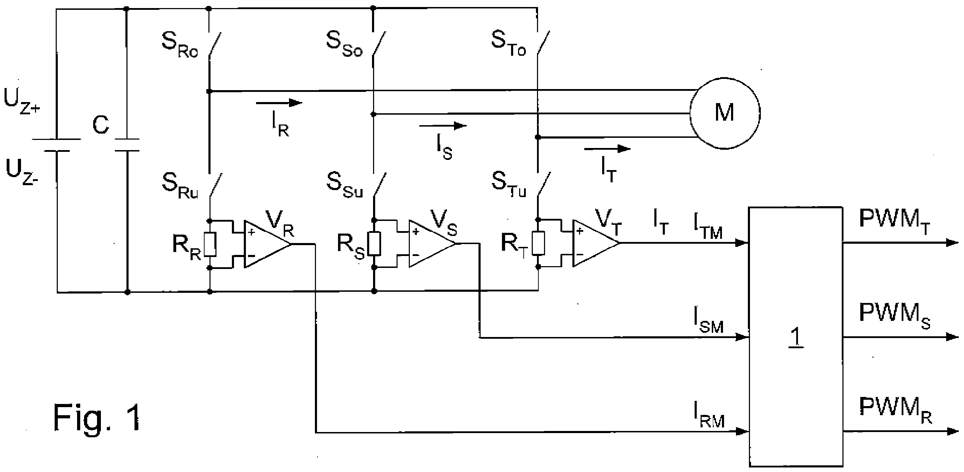

Aus der DE 196 81 189 T1 ist ein pulsweitenmoduliert betreibbarer Umrichter mit Zwischenkreiskondensator (Figur 1, Bezugszeichen 3) und eine mit diesem verbundene Endstufe bekannt, die nur einen Stromfühler zur Erfassung des Zwischenkreisstromes umfasst. Die Stromerfassung enthält somit je nach Winkel des Ausgangsspannungszeigers die Information über einen einzelnen Phasenstrom oder Summen von Phasenströmen. Nachteilig ist dabei, dass bei bestimmten Winkeln des Ausgangsspannungszeigers das Bestimmen eines Stromraumzeigers nicht zufriedenstellend ausführbar ist.

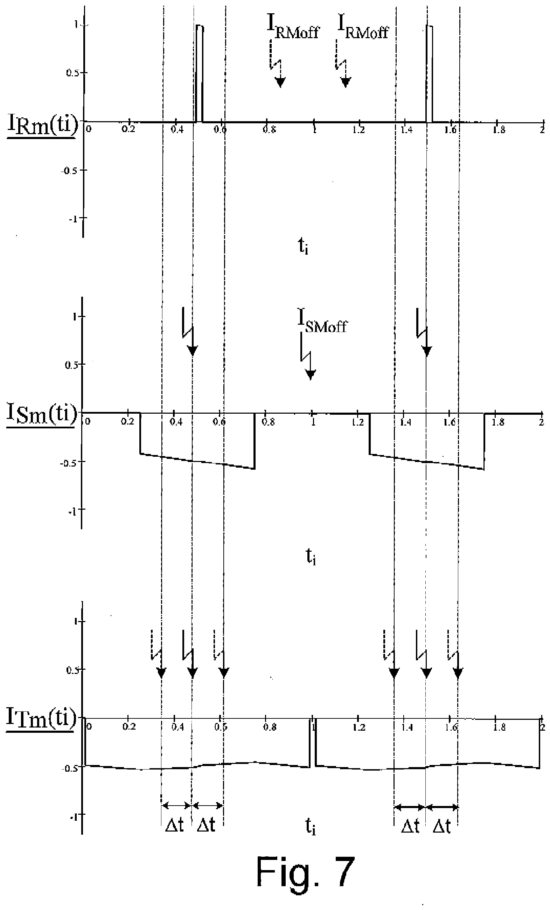

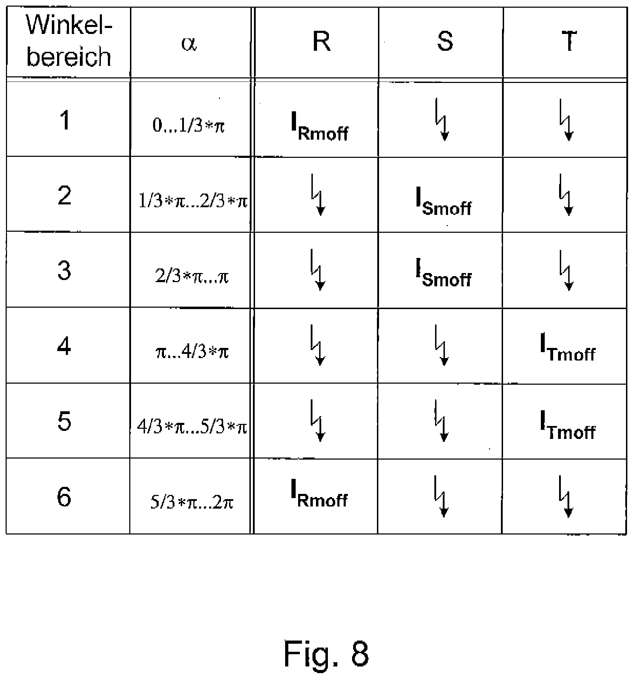

Aus der Schrift von Francesco Parasiliti, "Low cost current Sensing in DSP Based Drives", Industrial Electronics, 1999, ISIE'99, Proceedings of the IEEE, Volume 3, 1999, International Symposium, Volume 3, 1999, ist ein Umrichter bekannt, bei dem Shuntwiderstände in allen unteren Zweigen der Halbbrücken als Mittel zur Erfassung der jeweiligen Ströme angeordnet sind. Alle drei Strommesswerte werden erfasst, wobei die Messanstöße in der zeitlichen Mitte desjenigen Zeitabschnitts innerhalb einer Pulsweitenmodulationsperiode liegen, in welchem der diskrete Schaltzustand (000), also der Nullvektor $v_0$, anliegt (Seite 1287, linke Spalte und Figur 7). Bei der konkreten Ausführung ist ein kleiner Zeitversatz zu dieser Mitte wegen Berücksichtigung von Totzeiten, Signallaufzeiten und dergleichen, vorhanden. Aus den zugehörigen Messwerten wird dann der Stromraumzeiger bestimmt. Nachteil ist dabei allerdings, dass in den schattierten Bereichen des Hexagons (Seite 1287, linke Spalte, letzter Abschnitt und Figur 8) keine oder nur eine ungenaue Bestimmung des Stromraumzeigers möglich ist, da in diesen schattierten Bereichen entweder kein Nullvektor verwendet wird oder nur sehr kurz. Wenn nämlich der Nullvektor nicht vorhanden ist oder nur sehr kurz anliegt, ist damit automatisch in einer Phase kein oder nur ein sehr kurzes Strommesssignal vorhanden, welches somit für eine Auswertung nicht oder nur ungenau zur Verfügung steht. Daraus resultiert, dass im Falle eines über eine Pulsweitenmodulationsperiode gemittelten Ausgangsspannungsraumzeigers aus dem schattierten Bereich (Seite 1287, Figur 8) mindestens ein Strommesswert verfälscht ist.

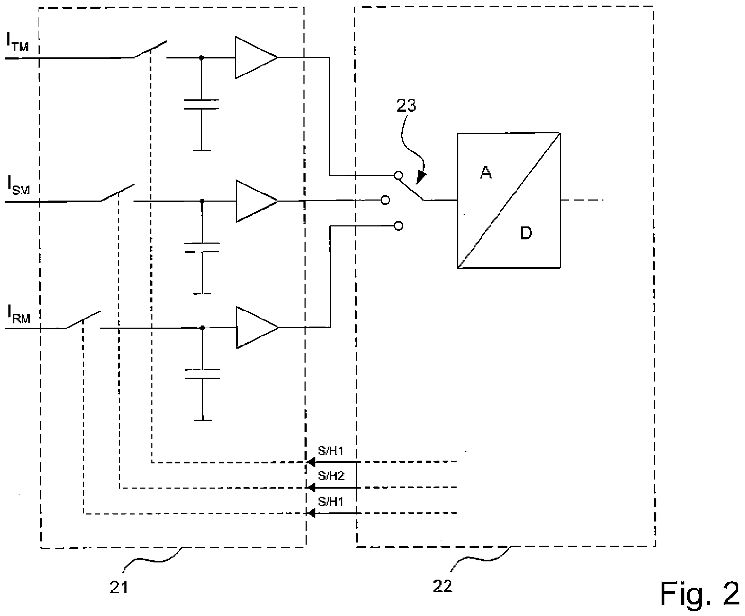

Aus der US 5 815 391 ist ein Umrichter bekannt, bei dem in allen unteren Zweigen der Halbbrücken Mittel zur Erfassung der jeweiligen Ströme angeordnet sind (Figur 2A). In der zugehörigen Tabelle (Figur 2B) wird erklärt, dass der Strom in der Phase A abhängig von den Schaltzuständen messbar (beispielhaft 1. Zeile: messbar;) oder aus den beiden anderen Strom-Messwerten berechenbar ist (5. Zeile: berechenbar;). Wenn jedoch der untere Schalter der Phase A und ein weiterer unterer Schalter geöffnet sind, ist der Strommesswert der Phase A nicht bestimmbar. Solche Schaltzustände sind in dieser Schrift als ,unknown' bei der Phase A gekennzeichnet.

Die genannte Tabelle 2B und das geschilderte Problem beziehen sich auf die Schaltzustände, also den jeweiligen Augenblickszustand des Umrichters. Die genannte Tabelle 2B bezieht sich nur auf Phase A. Es lassen sich aber die zugehörigen Tabellen für die Phasen B und C aufstellen. Dabei ist leicht zu erkennen, dass bei einigen Schaltzuständen, nämlich (111), (110), (101), (011), kein oder nur ein Strommesswert bestimmbar ist und somit auf keinen Fall ein Stromraumzeiger für diese Augenblickszustände. Aus der US 5 815 391 geht daher nicht hervor, wie ein Stromraumzeiger zu bestimmen ist, welcher dem über eine Pulsweitenmodulationsperiode gebildeten Mittelwert des real vorhandenen Stromraumzeigers entspricht. Insbesondere ist nicht dargestellt, wie vorzugehen ist, damit der Stromraumzeiger nicht durch Stromripple verfälscht ist.

Die Dauer eines ,known'- Schaltzustandes innerhalb einer Pulsweitenmodulationsperiode hängt von folgenden Faktoren ab:

Trägerfrequenz der Pulsweitenmodulation,
Art und Weise des Pulsweitenmodulationsverfahrens. Wenn diese Dauer eines ‚known'-Schaltzustandes zu kurz ist, ist der Stromraumzeiger nicht bestimmbar.

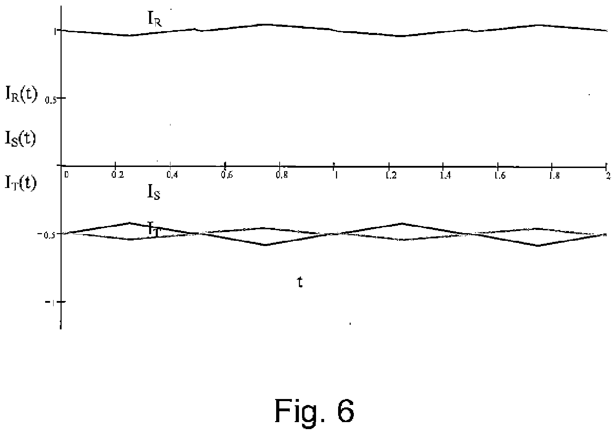

Wie das Pulsweitenmodulationsverfahren ausgeführt wird, ist in dieser Schrift nicht näher erläutert; es ist dem Fachmann jedoch klar, dass die Schrift lehrt, dass diese 'unknown'-Zustände ein Problem darstellen. In Spalte 1, Zeile 40 - 44 wird von einem 'Zurückrechnen' gesprochen, das aber nicht ausführbar beschrieben ist. Die Schrift lehrt den Fachmann, dass das Problem der 'unknown'-Zustände umgangen werden kann, indem gemäß den Figuren 5 und 6 sowohl in den oberen als auch in den unteren Zweigen der Halbbrücken Messmittel, insbesondere potentialfreie Messmittel, wie Rogowski-Spulen oder dergleichen, eingesetzt werden. Durch geschicktes Kombinieren der Messsignale, insbesondere Addition der Messsignale der unteren und der oberen Messmittel, wird ein kontinuierliches Strommesssignal erreicht und die 'unknown'-Zustände stellen kein Problem mehr dar.

Diese Lehre der US 5 815 391, sowohl in den oberen als auch in den unteren Zweigen der Halbbrücken Messmittel einzusetzen, wäre auch auf die vorgenannte IEEE Schrift anwendbar. Auf diese Weise wäre die Strommessung in den dort schattierten Bereichen problemlos und genau ausführbar. Allerdings müssten aufwendige Messmittel, insbesondere solche zur Überwindung der Potentialbarriere und somit kostspielige, vorgesehen werden. Die Lösungen wären also sehr aufwendig und kostspielig.

Aus der GB 2 437 696 A ist als nächstliegender Stand der Technik eine Offsetkorrektur bei einer Stromerfassung bekannt.

Aus der WO 03/041256 A2 und aus der WO 2009/127313 A2 sind jeweils ein Verfahren zur Bestimmung eines Stromraumzeigers bekannt.

Der Erfindung liegt daher die Aufgabe zugrunde, einen Umrichter weiterzubilden, bei dem auf möglichst viele kostspielige Teile verzichtet werden kann und insbesondere bei Massenproduktion eine kostengünstige Herstellung erreichbar ist und trotzdem ein Verfahren zur Bestimmung eines Stromraumzeigers ausführbar ist.

Erfindungsgemäß wird die Aufgabe bei einem Verfahren nach den in Anspruch 1 angegebenen Merkmalen gelöst.

Von Vorteil ist dabei, dass ein aktueller Offsetwert bestimmt wird und somit ein offsetbefreite Erfassung des Stromes ermöglicht ist, wodurch ein besseres Regelverhalten des Umrichters erzielbar ist. Auch bei einer gegebenenfalls auftretenden Temperaturdrift des Offsetwertes des Messverstärkers ist ein stets aktuell gültiger Wert bestimmt. Da die Drift bei industrieüblichen Betriebsweisen eine charakteristische Zeitkonstante aufweist, die größer ist als eine bei zu einer im Bereich zwischen 1 kHz und 100 kHz liegenden Pulsweitenmodulationsfrequenz gehörenden Pulsweitenmodulationsperiode, ist es nicht notwendig in jeder Pulsweitenmodulationsperiode einen Offsetwert zu bestimmen sondern es genügt, dies in größeren zeitlichen Abständen auszuführen. Außerdem ist bei der Erfindung keine Sample-Holdschaltung notwendig, obwohl Strommesswerte zu mehreren Phasen erfassbar sind und nur ein Analog/Digital-Wandler verwendet werden muss.

Bei einer vorteilhaften Ausgestaltung wird

- zur Ansteuerung der Halbbrücken ein symmetrisches Pulsmuster innerhalb eines Zeitabschnitts, der eine Pulsweitenmodulationsperiode beträgt, derart generiert, dass zu einem weiteren mittig in der Pulsweitenmodulationsperiode liegenden Abtastzeitpunkt jeweils ein Paar der drei oberen oder ein Paar der drei unteren, mit Mitteln zur Abtastung des Stromes ausgestatteten Brückenzweige eingeschaltet sind,

- in jedem der beiden eingeschalteten Brückenzweige mit den Mitteln zur Abtastung des Stromes mindestens ein Stromabtastwert bestimmt wird,

- das Paar von eingeschalteten Brückenzweigen abhängig vom mittleren Ausgangsspannungsraumzeiger verschieden gewählt wird und

- aus den Stromabtastwerten der Stromraumzeiger bestimmt wird, wobei der mittlere Ausgangsspannungsraumzeiger bestimmt ist durch die Differenzen der über eine Pulsweitenmodulationsperiode gemittelten Ausgangpotentiale der drei Ausgangsphasen.

Vorteiligerweise werden zur Bestimmung des Stromraumzeigers für jede Pulsweitenmodulationsperiode stets nur die zwei geeignetsten der drei möglichen Strommesswerte ausgewählt. Insbesondere liegt hierbei die überraschende Erkenntnis zugrunde, dass die Information über den Stromraumzeiger im Zeitverlauf der zwei geeignetsten Strommesssignale enthalten ist. Dabei ist es sogar erlaubt, dass innerhalb dieser Pulsweitenmodulationsperiode sogar Schaltzustände zeitweise auftreten dürfen, die für sich genommen keine Bestimmung des Stromraumzeigers erlauben würden, also im Sinne der US 5 815 391 'unknown'-Zustände sind!

Da bei der Variante mit in allen drei unteren Zweigen der Halbbrücken angeordneten Mittel zur Erfassung der jeweiligen Ströme immer diejenige Phase, bei der das entsprechende Pulsweitenmodulations-Signal kürzer als eine Mindestdauer im LOW-Zustand ist, nicht verwendet wird, ist ein sicheres Bestimmen des Stromraumzeigers gewährleistet unter Verwendung eines geeigneten Pulsweitenmodulationsverfahrens, insbesondere eines symmetrischen Pulsweitenmodulationsverfahrens. Dabei ist im jeweiligen LOW-Zustand der untere Leistungsschalter geschlossen und der obere geöffnet. Bei einem HIGH-Zustand liegt der umgekehrte Fall vor.

Außerdem sind möglichst viele kostspielige Teile verzichtbar, insbesondere potentialtrennende Stromfühler, da die Ströme nicht in den Ausgangszweigen sondern in den unteren oder oberen Zweigen der Halbbrücken gemessen werden. Bei Massenproduktion ist eine kostengünstige Herstellung erreichbar.

Insbesondere werden mit den zwei der drei Mitteln zur Erfassung der Ströme die zugehörigen Stromabtastwerte nicht gleichzeitig innerhalb der Pulsweitenmodulationsperiode erfasst und/oder die zugehörigen Messanstöße nicht gleichzeitig ausgeführt. Von Vorteil ist dabei, dass bei dem Umrichter ein Mikrocontroller mit nur einem einzigen Analog-Digital-Wandler und keiner zusätzlichen Sample-Hold-Schaltung verwendbar ist, also keiner extern vom Mikrocontroller angeordneten Sample-Hotd-Schaltung.

Insbesondere wird mit mindestens einem der zwei Mittel mehr als einmal pro Pulsweitenmodulationsperiode ein Stromabtastwert erfasst und/oder mehr als ein Messanstoß innerhalb einer Pulsweitenmodulationsperiode vorgesehen.

**Insbesondere wird mit einem ersten der zwei Mittel genau zweimal pro Pulsweitenmodulationsperiode ein Stromabtastwert erfasst und der Messanstoß für das zweite der zwei Mittel liegt in der Mitte der Pulsweitenmodulationsperiode. Vorteiligerweise liegen die zwei Messanstöße des ersten der zwei Mittel äquidistant zur Mitte der Pulsweitenmodulationsperiode, das heißt, dass der zeitliche Abstand vom ersten Messanstoß des ersten Mittels zum ersten Messanstoß des zweiten Mittels gleich groß ist wie der zeitliche Abstand vom Messanstoß des zweiten Mittels zum zweiten Messanstoß des ersten Mittels und der letztgenannte Messanstoß des zweiten Mittels in der Mitte der Pulsweitenmodulationsperiode liegt.**

Bei der Variante mit in allen drei unteren Zweigen der Halbbrücken angeordneten Mittel zur Erfassung der jeweiligen Ströme bezeichnet die zeitliche Mitte der Pulsweitenmodulations-Periode die zeitliche Mitte der jeweiligen LOW-Zustände. Während dieser Zustände sind Strommesssignale an den Mitteln zur Erfassung der jeweiligen Ströme vorhanden.

Zur Bestimmung des Stromraumzeigers sind die Strommesswerte von den zu den beiden genannten Mitteln gehörigen Phasen ausreichend. Bei der vorliegenden Erfindung sind stets die insgesamt drei Strommesswerte der beiden Mittel erhältlich, weil bei der Erfindung ein vorteilhaftes Pulsweitenmodulations-Verfahren verwendet wird, wie beispielsweise ein symmetrisches Pulsweitenmodulations-Verfahren, und der Ausgangsspannungsraumzeiger auf den Innkreis des Hexagons begrenzt wird. Dies bedeutet beispielsweise auch, dass keine Eckvektoren des Hexagons dauerhaft über eine ganze Pulsweitenmodulations-Periode hinweg auftreten.

**Damit der Stromraumzeiger frei vom Einfluss des durch die PULSWEITENMODULATION bedingten Stromripples bleibt, müssen die Messanstöße an geeigneten Zeitpunkten erfolgen. Dafür vorteilhaft wären die Zeitpunkte der Messanstöße der beiden Mittel jeweils gleichzeitig und in die Mitte der Pulsweitenmodulations-Periode zu legen. Dann wären jedoch entweder zwei A/D-Wandler oder externe Sample-Hold-Schaltungen notwendig, was kostspielig wäre. Erfindungsgemäß werden aber mit dem ersten Mittel zwei zeitlich versetzte Messanstöße ausgeführt. Der Zeitpunkt des Messanstoßes des zweiten Mittels ist in die Mitte der Pulsweitenmodulations-Periode gelegt. Die Zeitpunkte der beiden Messanstöße des ersten Mittels weisen jeweils den selben zeitlichen Abstand zur Mitte der Pulsweitenmodulations-Periode auf. Somit ist infolge der Mittelwertbildung und wegen der Symmetrie des Stromripples, der wegen des symmetrischen Pulsweitenmodulations-Verfahrens symmetrisch zur Mitte der Pulsweitenmodulations-Periode verläuft, ein Strommesswert unter Verwendung des ersten Mittels bestimmt, der gleich ist zu demjenigen Strommesswert, der mit dem ersten Mittel am Zeitpunkt der Mitte der Pulsweitenmodulations-Periode messbar wäre.**

**Insbesondere wird der Stromraumzeiger für jede Pulsweitenmodulationsperiode bestimmt. Von Vorteil ist dabei, dass auch bei kleiner Pulsweitenmodulationsfrequenz eine möglichst häufige Bestimmung des Stromraumzeigers vorsehbar ist zur Verbesserung der Regelgüte des Regelverfahrens des Umrichters.**

**Bei einer vorteilhaften Ausführung liegt der erste Abtastzeitpunkt mittig in der Pulsweitenmodulationsperiode oder mittig in einem Zeitabschnitt, währenddessen der jeweilige Brückenzweig ausgeschaltet wird. Vorteiligerweise ist somit ein im vorangegangenen Zeitabschnitt auftretender Strom abgeklungen und es sind keine Restströme mehr vorhanden.**

**Bei einer vorteilhaften Ausführung liegen mehrere erste Abtastzeitpunkte in jeweils einem Zeitabschnitt und der Mittelwert der erfassten Strommesswerte wird zur Bestimmung des Offsetwerts verwendet. Von Vorteil ist dabei, dass über einen Multiplexer die Messwerte von nur einem Analog/Digital-Wandler erfassbar sind, der zeitlich nacheinander die Strommesswerte von verschiedenen Brückenzweigen erfassbar macht.**

**Bei einer vorteilhaften Ausführung werden in einem weiteren ausgeschalteten Brückenzweig zeitlich symmetrisch um vor und nach dem ersten Abtastzeitpunkt Stromabtastwerte erfasst zur Bestimmung des Offsetwerts. Von Vorteil ist dabei,**

**dass die erfassten Werte für verschiedene ausgeschaltete Brückenzweige im Wesentlichen einer zeitsynchronen Erfassung entsprechen.**

Bei bevorzugten Ausführungen werden die Strommesssignale auf dem unteren Zwischenkreispotential gebildet, wobei den jeweiligen Halbbrücken zugeordnete Strommesswerte aus Stromabtastwerten bestimmt werden, die aus den Strommesssignalen abgeleitet werden. Insbesondere entspricht das Bezugspotential der Signalelektronik, die eine Steuer- und Regeleinrichtung des Umrichters umfasst, dem Bezugspotential, auf welchem die Strommesssignale gebildet werden. Von Vorteil ist dabei, dass Optokoppler zur Potentialtrennung einsparbar sind. Das Bezugspotential der Signalelektronik weist ebenfalls das untere Zwischenkreispotential auf. Wesentlicher Vorteil ist dabei, dass die Ansteuersignale der unteren Leistungsschalter in den Halbbrücken von der Signalelektronik generierbar sind, ohne dass ein hoher Spannungsabstand auftritt, der eine aufwendige Potentialtrennung notwendig machen würde. Nur die Ansteuersignale der oberen Leistungsschalter müssen über Optokoppler oder andere potentialtrennende Vorrichtungen angesteuert werden. Insbesondere bei einem Umrichter, der keine Anschlüsse für einen Geber, wie Drehzahl- oder Positionsgeber, oder für andere potential-abzutrennende Vorrichtungen aufweist, ist somit ein wesentlicher Schritt zur Kosteneinsparung und eine Reduktion der Anzahl der Teile erreichbar.

Vorteilhaft sind als untere Leistungsschalter in den Halbbrücken Leistungshalbleiterschalter, wie IGBT vom Typ npn, verwendbar, die mit Steuerspannungen ansteuerbar sind, die als Bezugspotential das untere Zwischenkreispotential aufweisen.

Bei Verwendung komplementärer Leistungshalbleiterschalter, wie beispielsweise IGBT vom Typ pnp, ist dann als Bezugspotential für die Strommessung und für die Signalelektronik das obere Zwischenkreispotential zu wählen und der Umrichter entsprechend zu gestalten.

Bei einer bevorzugten Ausführung wird das Paar abhängig vom Winkel des Ausgangsspannungsraumzeigers und nicht vom Pulsweitenmodulationsmuster verschieden ausgewählt. Von Vorteil ist dabei, dass die programmtechnische Realisierung besonders einfach ist.

Bei einer anderen Ausführung wird statt der einen Pulsweitenmodulationsperiode ein Zeitabschnitt von zwei oder mehreren Pulsweitenmodulationsperioden verwendet. Von Vorteil ist dabei, dass auch bei hoher Schaltfrequenz der Stromraumzeiger bestimmbar ist. Dabei ist zwar eine leichte Verfälschung vorhanden, die aber bei hoher Schaltfrequenz gering ist.

Bei einer bevorzugten erfindungsgemäßen Ausführung wird das Erfassen des mit dem ersten Strommessmittel, also Mittel zur Erfassung der Ströme, erfassten Stromabtastwertes mittig in der Pulsweitenmodulationsperiode ausgeführt. Insbesondere wird mit einem zweiten der zwei Strommessmittel ein erster und ein zweiter zugehöriger Stromabtastwert symmetrisch vor und nach dem Erfassen eines mit dem ersten Strommessmittel erfassten Stromabtastwertes erfasst. Von Vorteil ist dabei, dass mit nur einem Analog-Digital-Wandler ohne externe Sample-Hold-Schaltungen Strommesswerte bestimmbar sind, die nicht von Pulsweitenmodulations-bedingten Stromripple verfälscht sind. Also ist die Bestimmung der Strommesswerte besonders einfach und mit wenig Rechenaufwand ausführbar.

Bei Verwendung zusätzlicher externer Sample-Hold-Schaltungen könnten mit den zwei der drei Mitteln zur Erfassung der Ströme die zugehörigen Stromabtastwerte gleichzeitig erfasst und/oder die zugehörigen Messanstöße gleichzeitig ausgeführt werden. Insbesondere würden die Messanstöße mittig in der Pulsweitenmodulationsperiode ausgeführt. Von Vorteil wäre dabei, dass die Bestimmung der Strommesswerte besonders einfach ist und trotzdem keine durch Stromripple verursachten Verfälschungen vorhanden sind.

Bei einer anderen bevorzugten Ausführung der Erfindung wird mit dem ersten der zwei Mittel zur Erfassung der Ströme ein zugehöriger Stromabtastwert mindestens eine Pulsweitenmodulationsperiode nach dem Erfassen eines zum zweiten Mittel zur Erfassung der Ströme zugehörigen Stromabtastwertes erfasst. Insbesondere liegen die zu den beiden Mitteln zur Erfassung der Ströme zugehörige Messanstöße in verschiedenen Pulsweitenmodulationsperioden. Von Vorteil ist dabei, dass auch bei hohen Schaltfrequenzen unter Verwendung nur eines einzigen Analog-Digital-Wandlers und ohne zusätzliche Sample-Hold-Schaltungen ein Stromraumzeiger bestimmbar ist, insbesondere ohne durch Stromripple verursachten Verfälschungen.

Bei einer bevorzugten Ausführung wird der erste Stromabtastwert des Paares mehr als einmal pro Pulsweitenmodulationsperiode erfasst und aus den erfassten Werten wird ein gemäß den Zeitpunkten der jeweiligen Erfassung interpolierter Wert und/oder Mittelwert gebildet. Insbesondere wird ein erster Stromabtastwert des Paares, der einer ersten Halbbrücke zugeordnet ist, vor und nach dem zweiten Stromabtastwert des Paares, der einer zweiten Halbbrücke zugeordnet, erfasst. Von Vorteil ist dabei, dass durch Interpolation oder auch Mittelwertbildung ein fiktiver Strommesswert mit guter Genauigkeit bestimmbar ist, der zeitgleich zum anderen erfassten Stromabtastwert vorhanden ist.

Bei einer bevorzugten Ausführung entspricht der erfasste Stromraumzeiger dem Mittelwert des Stromraumzeigers über eine Pulsweitenmodulationsperiode. Von Vorteil ist dabei, dass der infolge der Pulsweitenmodulation vorhandene Stromripple das Ergebnis und somit auch die Regelverfahren nicht verfälscht.

Wesentliche Merkmale der Erfindung bei dem Umrichter, umfassend eine Signalelektronik und eine Leistungsendstufe, die in drei, jeweils einen unteren und einen oberen Zweig umfassende Halbbrücken angeordnete Leistungsschalter umfasst, wobei der Umrichter pulsweitenmoduliert betreibbar ist, sind, dass

- entweder in allen drei unteren oder in allen drei oberen Zweigen der Halbbrücken Mittel zur Erfassung der jeweiligen Ströme angeordnet sind,

- von den drei Mitteln zur Erfassung der Ströme erfasste Strommesssignale über einen Multiplexer nur einem einzigen Analog-Digital-Wandler zugeführt werden und/oder zuführbar sind.

Von Vorteil ist dabei, dass kostspielige potentialtrennende Mittel einsparbar und das Bauvolumen des Umrichters reduzierbar ist.

Bei einer bevorzugten Ausführung umfassen die Mittel zur Stromerfassung Widerstände, insbesondere Shunt-Widerstände. Von Vorteil ist dabei, dass die Stromerfassung äußerst kostengünstig sind.

Bei einer bevorzugten Ausführung sind die Mittel zur Stromerfassung derart in den Halbbrücken angeordnet, dass sie entweder mit dem oberen oder mit dem unteren Zwischenkreispotential verbunden sind. Von Vorteil ist dabei, dass Mittel zur Potentialtrennung einsparbar sind. Bei einer weiter bevorzugten Ausführung weist die Signalelektronik ein Bezugspotential auf, das auch Bezugspotential für die Mittel zur Stromerfassung ist. Wenn dieses Bezugspotential Uz- beträgt, dann sind die Mittel zur Potentialtrennung für die Ansteuersignale der unteren Leistungsschalter der Halbbrücken einsparbar. Wenn dieses Bezugspotential Uz+ beträgt, dann sind die Mittel zur Potentialtrennung für die Ansteuersignale der oberen Leistungsschalter der Halbbrücken einsparbar.

Bei einer bevorzugten Ausführung weist die Signalelektronik ein Bezugspotential auf, das auch Bezugspotential für die Mittel zur Stromerfassung ist. Von Vorteil ist dabei, dass kostspielige potentialtrennende Mittel einsparbar sind. Denn, wären die Mittel zur Stromerfassung in den Zuleitungen zum Motor vorgesehen, würden kostspielige potentialtrennende Mittel notwendig sein.

Bei einer bevorzugten Ausführung ist einem einzigen Analog-Digital-Wandler mittels eines Multiplexers und/oder Schalters jedes Mittel zur Stromerfassung zuordenbar. Von Vorteil ist dabei, dass der Umrichter kostengünstig ausführbar ist, insbesondere durch Einsparung von weiteren Analog-Digital-Wandlern.

Prinzipiell wäre es auch möglich, mehr als ein Analog-Digital-Wandler den Mitteln zur Stromerfassung zuzuordnen. Von Vorteil wäre dabei, dass bei Verwendung geeignet angeordneter Multiplexer das jeweils ausgewählte Paar von Mitteln zur Erfassung der Ströme den beispielsweise zwei Analog-Digital-Wandlern zuordenbar ist und zusätzliche Sample-Hold-Schaltungen einsparbar sind. Insbesondere wäre jedem Mittel zur Stromerfassung jeweils ein Analog-Digital-Wandler zuordenbar. Von Vorteil ist dabei, dass keine zusätzlichen Sample-Hold-Schaltungen notwendig sind und eine synchrone Erfassung der Stromabtastwerte gewährleistbar ist. Bevorzugt wäre dann auch zwischen jedem Mittel zur Stromerfassung und dem zuordenbaren Analog-Digital-Wandler jeweils eine Sample-Hold-Schaltung anordenbar. Von Vorteil wäre hierbei, dass der Stromraumzeiger ohne Verfälschung durch Stromripple bestimmbar ist und ein einziger Analog-Digital-Wandler genügt. Weiter bevorzugt könnte die Signalelektronik einen Mikrocontroller, der einen einzigen Analog-Digital-Wandler aufweist, und eine Sample-Hold-Schaltung aufweisen, die nicht vom Mikrocontroller umfasst ist, also eine zusätzliche externe. Von Vorteil wäre dabei, dass ein kostengünstiger Mikrocontroller verwendbar ist, der nur einen einzigen Analog-Digital-Wandler umfasst.

Bei einer bevorzugten Ausführung umfasst die Signalelektronik Mittel zur Erzeugung pulsweitenmodulierter Steuersignale für die Leistungsschalter und die Signalelektronik weist ein Bezugspotential auf, das auch Bezugspotential für die Mittel zur Stromerfassung ist. Von Vorteil ist dabei, dass Mittel zur Potentialtrennung einsparbar sind.

Bei einer vorteilhaften Ausführung der Erfindung ist einem einzigen Analog-Digital-Wandler mittels eines Multiplexers und/oder Schalters ein jeweiliges Mittel zur Stromerfassung zuordenbar. Somit sind dann kostspielige weitere Analog-Digital-Wandler verzichtbar.

Bei einer anderen vorteilhaften Ausführung des erfindungsgemäßen Verfahrens sind die wesentlichen Merkmale, dass

- entweder in allen drei unteren oder in allen drei oberen Zweigen der Halbbrücken Mittel zur Erfassung der jeweiligen Ströme angeordnet sind,

- die Pulsweitenmodulationsfrequenz größer ist als eine Mindestfrequenz,

- innerhalb eines Zeitabschnitts, der zwei Pulsweitenmodulationsperioden beträgt, mit zwei der drei Mittel zur Erfassung der Ströme jeweils mindestens ein zugehöriger Stromabtastwert bestimmt wird und in beiden Pulsweitenmodulationsperioden derselbe mittlere Ausgangsspannungsraumzeigers ausgegeben wird,

- mit einem ersten Mittel des Paares ein erster Stromabtastwert in der Mitte der ersten der zwei Pulsweitenmodulationsperioden erfasst wird und mit einem zweiten Mittel des Paares ein zugehöriger Stromabtastwert in der Mitte der zweiten, also unmittelbar nachfolgenden Pulsweitenmodulationsperiode erfasst wird,

- aus den mit diesem Paar von Mitteln bestimmten Stromabtastwerten ein Stromraumzeiger gebildet wird oder die Stromwerte in den Ausgangszweigen gebildet werden, insbesondere zur Verwendung in einem Steuer- und/oder Regelverfahren, und

- dieses Paar von Mitteln abhängig vom mittleren Ausgangsspannungsraumzeiger verschieden ausgewählt wird,

- und wobei der mittlere Ausgangsspannungsraumzeiger bestimmt ist durch die Differenzen der über eine Pulsweitenmodulationsperiode gemittelten Ausgangspotentiale der drei Ausgangsphasen.

Von Vorteil ist dabei, dass auch bei hohen Pulsweitenmodulations-Frequenzen ein einziger Analog-Digital-Wandler ausreichend ist und keine externen Sample-Hold-Schaltungen notwendig sind. Bei Unterschreiten der Mindestfrequenz, die beispielsweise 10 kHz beträgt, ist auf das zuvor beschriebene erfindungsgemäße Verfahren umschaltbar. Somit sind die Vorteile sogar bei allen Pulsweitenmodulations-Frequenzen vorhanden. Weitere vorteilhafte Ausgestaltungen ergeben sich aus den Unteransprüchen.

Die Erfindung wird nun anhand von Abbildungen näher erläutert:

In der Figur 1 ist für einen dreiphasigen Umrichter eine Leistungsendstufe schematisch skizziert. Die Leistungsschalter mit zugeordneten Freilaufdioden sind dabei durch sechs Schaltersymbole $S_{Ro}$, $S_{So}$, $S_{To}$, $S_{Ru}$, $S_{Su}$ und $S_{Tu}$ bezeichnet. In den unteren Zweigen der Halbbrücken sind als Mittel zur Stromerfassung Shunt-Widerstände $R_R$, $R_S$ und

$R_T$ angeordnet. Diese sind somit mit dem unteren Bezugspotential $U_{Z\_}$ verbunden, das auch gleichzeitig Bezugspotential der eine Steuer- und Regelvorrichtung 1 umfassenden Signalelektronik des Umrichters ist. Die motorseitigen Ausgangspotentiale des Umrichters sind $U_R$, $U_S$ und $U_T$; die Motorströme sind mit $I_R$, $I_S$ und $I_T$ bezeichnet.

Die Widerstände sind mit Verstärkerschaltungen $V_R$, $V_S$ und $V_T$ verbunden, die jeweils ausgangsseitig ein Strommesssignal $I_{RM}$, $I_{SM}$ und $I_{TM}$ erzeugen. Aus den drei Strommesssignalen werden durch Analog-Digital-Wandlung Stromabtastwerte abgeleitet, aus denen Strommesswerte gebildet werden. Aus diesen Strommesswerten wird der Stromraumzeiger bestimmt, wobei die zu den Strommesswerten zugehörigen Halbbrücken abhängig vom Winkel des Spannungsraumzeigers ausgewählt werden. Da für die Motorströme nach der Kirchhoffschen Regel $I_R + I_S + I_T = 0$ gilt, weist dieser Stromraumzeiger zwei Freiheitsgrade auf. Er weist also zwei unabhängige Parameter auf. Daher genügt es prinzipiell, dass zur Bestimmung des Stromraumzeigers nur zu zwei Zweigen zugeordnete Strommesswerte verwendet werden. Dabei ist allerdings zu beachten, dass Pulsweitenmodulationssignale des Umrichters innerhalb einer Pulsweitenmodulationsperiode nicht konstant sein müssen, also die Schaltzustände derart wechseln, dass sogar Schaltzustände zeitweise auftreten können, die für sich allein genommen gar keine Bestimmung des Stromraumzeigers erlauben würden!

**Für das Regelverfahren des Umrichters ist es zur Erreichung einer hinreichenden Regelgüte ausreichend, einmal pro Pulsweitenmodulationsperiode einen Stromraumzeiger als Rechengröße zu bestimmen, der den über eine Pulsweitenmodulationsperiode gebildeten Mittelwert des physikalischen Stromraumzeigers repräsentiert.**

Die von der Steuer- und Regelvorrichtung 1 generierten Pulsweitenmodulations-Signale $PWM_R(t)$, $PWM_S(t)$ und $PWM_T(t)$ bestimmen den Zustand der Leistungsschalter $S_{Ro}$, $S_{So}$, $S_{To}$, $S_{Ru}$, $S_{Su}$ und $S_{Tu}$. Die Pulsweitenmodulations-Signale sind folgendermaßen vorgesehen: Wenn das jeweilige Pulsweitenmodulations-Signal , beispielsweise $PWM_R(t)$, 1 beträgt, wird der zugehörige obere Leistungsschalter, also beispielhaft $S_{Ro}$, geschlossen und der zugehörige untere Leistungsschalter, also beispielhaft $S_{Ru}$, geöffnet. In diesem Fall beträgt das zugehörige Ausgangsspannungspotential $U_{Z+}$. Beträgt das Pulsweitenmodulations-Signal 0, ist also im LOW-Zustand, sind die zugehörigen Leistungsschalter in dem jeweils anderen Zustand und das zugehörige Ausgangsspannungspotential beträgt $U_{Z-}$. Die in der praktischen Realisierung eingefügte sogenannte Totzeit, während der der jeweils obere und untere Schalter offen ist, ist für die prinzipielle Funktion der Erfindung nicht relevant.

Wenn ein zu einer Halbbrücke gehörendes Pulsweitenmodulations-Signal sich im LOW-Zustand befindet, fließt der zugehörige Motorstrom im unteren Zweig der zugehörigen Halbbrücke und damit über den jeweiligen Shunt-Widerstand. Zur genauen Erfassung der Strommesswerte muss der Shunt-Widerstand länger als eine Mindestdauer vom zugehörigen Motorstrom durchflossen werden. Die Mindestdauer ist dabei abhängig von der Filterwirkung der Messverstärkerschaltungen, umfassend Verstärkerschaltungen $V_R$, $V_S$ und $V_T$. Eine Filterwirkung wird durch entsprechende Beschaltung erreicht, um Rauschanteile oder Störanteile bei den Strommesswerten zu unterdrücken. Beispielsweise ist bei einer Pulsweitenmodulationsfrequenz von 16 kHz eine Filterzeitkonstante aus dem Bereich von 0,5 µs bis 2 µs vorteilhaft.

Bei der vorliegenden Erfindung wird vorteiligerweise ein sogenanntes symmetrisches Pulsweitenmodulationsverfahren verwendet. Bei solchen symmetrischen Pulsweitenmodulationsverfahren hat derjenige zeitliche Mittelwert, der aus dem Wert des Zeitpunktes eines ersten Schaltzustandswechsels des Pulsweitenmodulations-Signals in einer ersten Phase und dem Wert des Zeitpunktes des zeitlich nachfolgenden zugehörigen Schaltzustandswechsels in der selben Phase gebildet wird, den selben Wert wie die entsprechend gebildeten Mittelwerte der anderen beiden Phasen. Daher liegen also die Schaltzustandswechsel von HIGH auf LOW und zurück in allen drei Phasen symmetrisch zur Mitte der Pulsweitenmodulations-Periode.

Bei der Erfindung wird die Amplitude des gemittelten Ausgangsspannungsraumzeigers auf $U_Z/\sqrt{3}$ begrenzt, so dass stets ein sinusförmiges Drehspannungssystem generierbar ist. Diese Begrenzung bezeichnet bei der Erfindung die maximale Aussteuerung. Eine Übersteuerung, also Verlassen dieses durch die Begrenzung definierten Arbeitsbereiches, wird stets vermieden.

Die Erfindung bezieht sich also nur auf solche Umrichter, die derart pulsweitenmoduliert betrieben werden, dass in keiner Pulsweitenmodulationsperiode eine derartig hohe Aussteuerung vorgenommen wird, dass nur ein einziger aktiver Schaltzustand für eine volle Pulsweitenmodulationsperiode auftritt. Bei einem solchen aktiven Schaltzustand nehmen die Pulsweitenmodulations-Signale $PWM_R(t)$, $PWM_S(t)$ und $PWM_T(t)$ die Werte (110), (101), (100), (001), (010) oder (011) an, die auch als diskrete aktive Ausgangsspannungsraumzeiger bezeichnet werden. Aktive Schaltzustände umfassen also nicht die Schaltzustände (111) und (000). Die beiden zuletzt genannten Schaltzustände werden jeweils auch als diskreter Nullspannungsraumzeiger oder Nullvektor bezeichnet.

Sogenannte Randvektoren sind diejenigen, über eine Pulsweitenmodulationsperiode gemittelten Ausgangsspannungsraumzeiger, welche beim theoretischen Anlegen eines einzigen der aktiven Schaltzustände über eine ganze Pulsweitenmodulationsperiode sich ergeben würden. Bei der Erfindung nimmt der über eine Pulsweitenmodulationsperiode gemittelte Ausgangsspannungsraumzeiger nie den Wert eines solchen Randvektors an wegen der oben erwähnten Begrenzung des Arbeitsbereichs.

Im Bild der genannten IEEE - Schrift von Francesco Parasiliti nach der dortigen Figur 8 auf Seite 1287 gesprochen, bedeutet die oben beschriebene Begrenzung des über eine Pulsweitenmodulationsperiode gemittelten Ausgangsspannungsraumzeigers, dass dieser innerhalb des maximalen Innkreises des Hexagons liegt. Der gemittelte Ausgangsspannungsraumzeiger nimmt nie den Wert eines Randvektors an, kommt also bei der Erfindung nie auf die Ecken des Hexagons zu liegen.

Da der Ausgangsspannungsraumzeiger begrenzt ist, wechseln sich verschiedene diskrete Schaltzustände ab. Durch geschickte Wahl der Zeitpunkte für die Messanstöße innerhalb einer Pulsweitenmodulationsperiode ist für jede Pulsweitenmodulationsperiode ein Stromraumzeiger bestimmbar. Die sich abwechselnden Zustände umfassen dabei unter Anderem sogar Zustände, bei denen die Bestimmung eines Stromraumzeigers nicht möglich wäre, wenn sie dauerhaft über eine Pulsweitenmodulationsperiode anliegen würden, wie beispielsweise auch den Zustand (101) entsprechend der letzten Zeile der Tabelle 2B aus der US 5 815 391. Insbesondere wird beispielsweise an einem ersten Zeitpunkt in einer ersten Phase ein Messanstoß ausgeführt, zu einem anderen zweiten Zeitpunkt in einer zweiten Phase ein zweiter Messanstoß und zu einem dritten Zeitpunkt in der ersten Phase ein dritter Messanstoß. Durch Mittelwertbildung des ersten und dritten Messwertes wird erreicht, dass der ermittelbare Stromraumzeiger nicht durch Stromripple verfälscht ist bei dem für die Erfindung zulässigen Pulsweitenmodulations-Verfahren, insbesondere symmetrischen Pulsweitenmodulations-Verfahren, bei denen der Ausgangsspannungsraumzeiger auf den Innkreis des Hexagons begrenzt ist. Somit ist also nur ein einziger Analog-Digital-Wandler notwendig, insbesondere ohne externe zusätzliche Sample-Hold-Schaltungen.

In der Figur 2 ist eine realisierbare Variante für einen Teil der Steuer- und Regelvorrichtung 1 aus Figur 1 gezeigt. Dieser umfasst eine Sample-Hold-Schaltung 21, der die drei Strommesssignale zugeführt werden, und einen Mikrocontroller 22 mit integriertem Analog-Digital-Wandler. Der Mikrocontroller 22 steuert über die Signale S/H1, S/H2 und S/H3 die Abtastzeitpunkte, die auch als Messanstöße bezeichnet werden, zu denen die Sample-Hold-Schaltung 21 Strommesssignale bis zur Analog-Digital-Wandlung fest hält. Der Mikrocontroller 22 muss dann nur einen einzigen Analog-Digital-Wandler zusammen mit einem Analog-Multiplexer oder Umschalter 23 umfassen. Vorteil ist dabei, dass mit nur einem einzigen Analog-Digital-Wandler eine gleichzeitige Erfassung von Stromabtastwerten erreicht ist, obwohl eine sequentielle Analog-Digital-Wandlung stattfindet. Im Mikrocontroller 22 werden dann aus den Stromabtastwerten Strommesswerte beziehungsweise ein Stromraumzeiger bestimmt. Der Mikrocontroller 22 steuert über die Signale S/H1, S/H2 und S/H3 die Sample-Hold-Schaltung und damit die Messanstöße entsprechend der weiter unten geschilderten Verfahren.

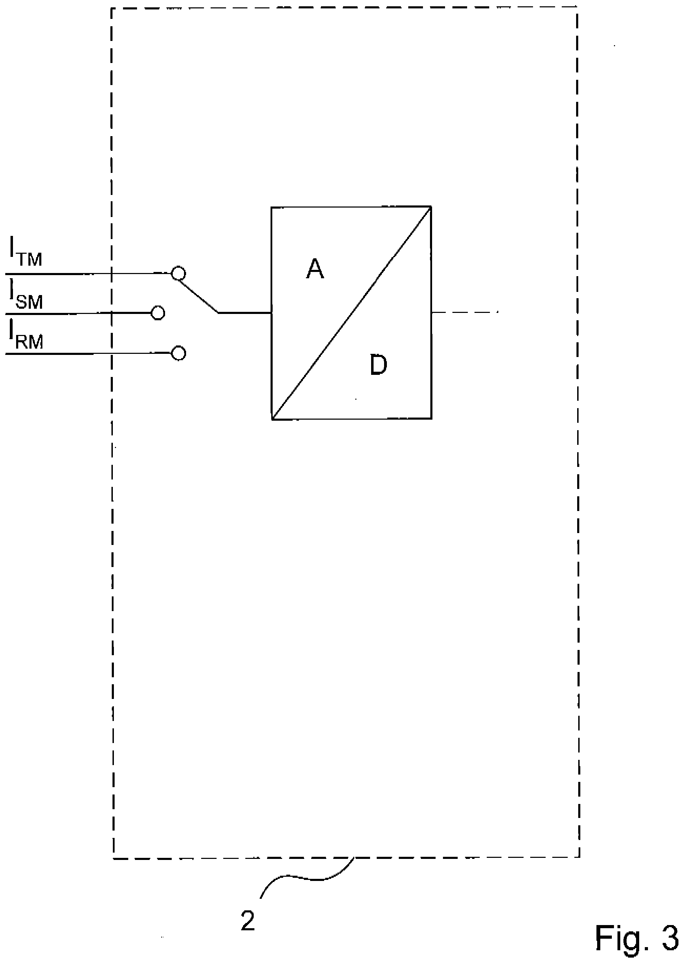

In einem anderen erfindungsgemäßen Ausführungsbeispiel ist gemäß Figur 3 im Unterschied zur Variante nach Figur 2 die Sample-Hold-Schaltung 21 einsparbar. Dabei ist es jedoch notwendig, die Stromabtastwerte nacheinander zu erfassen entsprechend der weiter unten geschilderten Verfahren.

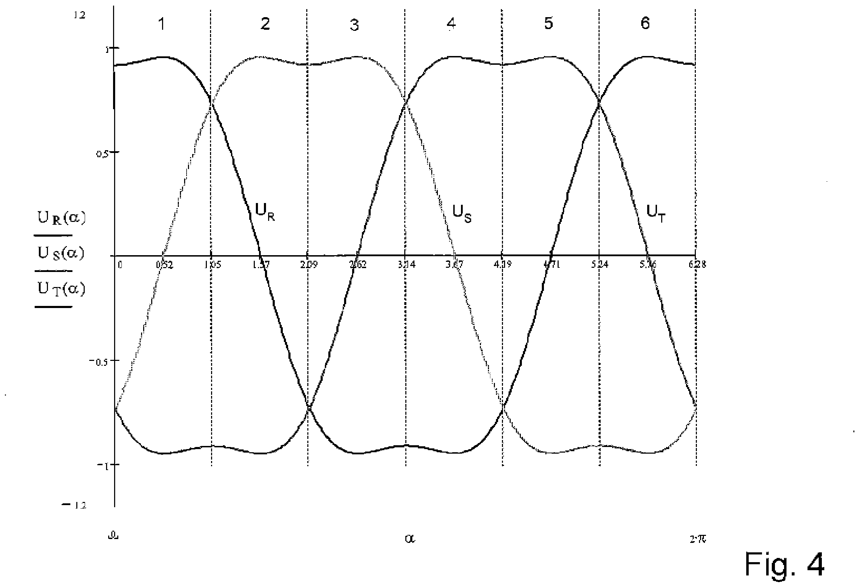

In der Figur 4 sind beispielhafte zeitliche Verläufe der über jeweils eine Pulsweitenmodulationsperiode gemittelten motorseitigen Ausgangspotentiale $U_R$, $U_S$ und $U_T$ des Umrichters über eine Ausgangsspannungsperiode gezeigt, wobei die motorseitigen Ausgangspotentiale $U_R$, $U_S$ und $U_T$ normiert eingezeichnet sind und der Ausgangsspannungswinkel $\alpha$ sich über den Bereich von 0 bis $2\pi$ erstreckt. Entsprechend der Normierung entspricht der Potentialwert $U_{Z-}$ dem Wert -1 und $U_{Z+}$ dem Wert+1.

In der Figur 4 ist zu erkennen, dass die Mittelwerte der Ausgangspotentiale eine dritte Oberschwingung enthalten.

Weiter sind in Figur 4 Winkelbereiche 1 bis 6 des Ausgangsspannungszeigers eingezeichnet, in denen verschiedene Mittel zur Stromerfassung gemäß dem erfindungsgemäßen Verfahren verwendet werden.

Bei einem Ausgangsspannungswinkel von $\alpha$ =

$\pi/6$ beträgt der Mittelwert des Ausgangspotentials $U_S$ Null. Der Mittelwert des Ausgangspotentials $U_R$ liegt in der Nähe des positiven maximalen Wertes 1. Der Mittelwert des Ausgangspotentials $U_T$ liegt in der Nähe des minimalen Wertes -1. Die Mittelwerte der Ausgangspotentiale erreichen bei diesem Ausgangsspannungswinkel und bei der beispielhaft gewählten Amplitude also fast die maximale Aussteuerung des Umrichters.

In der Figur 5 sind für die Ausgangspotentiale aus Figur 4 wieder beim Ausgangsspannungswinkel $\alpha = \pi/6$ zugehörige zeitliche Verläufe der Pulsweitenmodulations-Signale $PWM_R(t)$, $PWM_S(t)$ und $PWM_T(t)$ skizziert. Aus diesen werden die Ansteuersignale für die Leistungsschalter $S_{Ro}$, $S_{So}$, $S_{To}$, $S_{Ru}$, $S_{Su}$ und $S_{Tu}$ abgeleitet. Wenn das jeweilige Pulsweitenmodulations-Signal , beispielsweise $PWM_R(t)$, 1 beträgt, wird der zugehörige obere Leistungsschalter, also beispielhaft $S_{Ro}$, geschlossen und der zugehörige untere Leistungsschalter, also beispielhaft $S_{Ru}$, geöffnet. In diesem Fall beträgt das zugehörige Ausgangsspannungspotential $U_R = U_{Z+}$. Beträgt das Pulsweitenmodulations-Signal 0 gehen die zugehörigen Leistungsschalter in den jeweils anderen Zustand und das zugehörige Ausgangsspannungspotential beträgt $U_{Z-}$. Die in der praktischen Realisierung eingefügte sogenannte Totzeit, während der der jeweils obere und untere Schalter offen ist, ist für die Funktion der Erfindung prinzipiell nicht relevant. In der Figur 5 sind in Abszissenrichtung zwei Pulsweitenmodulationsperioden gezeigt.

Das über eine Pulsweitenmodulationsperiode gemittelte Ausgangsspannungspotential $U_S$ =0 wird gemäß Figur 5 durch ein $PWM_S(t)$- Signal erreicht, das zu 50% der Pulsweitenmodulationsperiode 1 ist und zu 50% der Pulsweitenmodulationsperiode 0 ist. Die Pulsweitenmodulations-Verhältnisse der anderen Pulsweitenmodulations-Signale $PWM_R(t)$ und $PWM_T(t)$ sind entsprechend deren über eine Pulsweitenmodulationsperiode gemitteltes Ausgangsspannungspotential verteilt.

In der Figur 6 sind die zu den beiden genannten Pulsweitenmodulationsperioden zugehörigen beispielhaften Motorströme $I_R(t)$, $I_S(t)$ und $I_T(t)$ in den Ausgangszweigen gezeigt. Außerdem ist die aufgrund der pulsweitenmodulierten Ausgangspotentiale resultierende Stromwelligkeit angedeutet.

In der Figur 7 ist der zu den beiden genannten Pulsweitenmodulationsperioden zugehörige idealisierte zeitliche Verlauf der Strommesssignale $I_{RM}$(t), $I_{SM}$(t) und $I_{TM}$(t) gezeigt ohne die filternde Wirkung der Verstärkerschaltungen $V_R$, $V_S$ und $V_T$. Ein von Null abweichender Stromabtastwert ergibt sich immer nur zu denjenigen Zeitabschnitten, bei denen das Pulsweitenmodulations-Signal der zugehörigen Halbbrücke Null ist; d.h., der untere Schalter geschlossen ist. Ist der obere Schalter geschlossen, fließt nämlich der Motorstrom nicht über den Shunt-Widerstand der Halbbrücke, so dass während dieser Zeit der Strommesssignal unabhängig vom tatsächlichen Strom Null ist. Die Strommesssignale repräsentieren also nicht kontinuierlich die Motorströme sondern sie repräsentieren diese lediglich in denjenigen Zeitabschnitten, in welchen die Pulsweitenmodulations-Signalen $PWM_R(t)$, $PWM_S(t)$ und $PWM_T(t)$ Null sind. Bei dem gezeigten Verlauf ist das Strommesssignal $I_{RM}(t)$ nur während eines sehr kurzen Zeitabschnittes von Null verschieden. Bei Vollaussteuerung der Ausgangsspannung würde dieser Zeitabschnitt sogar gänzlich verschwinden. Aus Figur 7 ist daher ersichtlich, dass das Bestimmen eines Stromraumzeigers bei solchen Betriebszuständen versagt, wenn der Stromraumzeiger unter Verwendung von Strommesssignalen gebildet wird, die nur so kurzzeitig von Null verschieden sind, wie in Figur 7 beispielhaft $I_{RM}(t)$, dass sie durch die Filterwirkung zum Zeitpunkt der Erfassung, also beim Messanstoß, nennenswert verfälscht werden. Eine Mindestfilterwirkung ist aber notwendig, um Messrauschen und Störsignale zu unterdrücken.

Daher wird bei der vorliegenden Erfindung für jede Pulsweitenmodulationsperiode dasjenige "optimale" Paar, das die jeweils breiteren Pulsweitenmodulations-Signale aufweist, aus den drei Halbbrücken ausgewählt, d.h. es werden nur Strommesssignale dieser beiden speziellen Halbbrücken verwendet. Das Auswählen erfolgt derart, dass dasjenige Strommesssignal nicht verwendet wird, dessen unterer Schalter innerhalb einer jeweiligen Pulsweitenmodulationsperiode eine kürzere Zeit den geschlossenen Zustand aufweist als die beiden anderen unteren Schalter.

In der Figur 7 ist ein Betriebszustand für zwei Pulsweitenmodulationsperioden gezeigt, bei dem das ausgewählte Paar $I_{SM}(t)$ und $I_{TM}(t)$ ist. Für diese sind auch die Zeitpunkte, zu denen die Stromabtastwerte erfasst werden und die auch als Messanstöße bezeichnet werden, durch gezackte Pfeile angedeutet.

Dabei sind erfindungsgemäß zwei Grundtypen von Verfahren verwendbar.

Für ein erstes Verfahren sind die Messanstöße mit durchgezogen, nicht gestrichelt gezeichneten gezackten Pfeilen eingezeichnet. Dabei werden die Stromabtastwerte beim ausgewählten Paar $I_{SM}(t)$ und $I_{TM}(t)$ gleichzeitig erfasst. Hierbei sind verschiedene Ausführungen vorsehbar. Bei einer ersten Ausführung wird jeder Stromabtastwert durch einen separaten Analog-Digital-Wandler gebildet. Bei einer zweiten Ausführung werden die drei Strommesssignale gemäß Figur 2 jeweils einem Sample-Hold-Verstärker der Sample-Hold-Schaltung 21 zugeführt, wobei die Sample-Hold-Verstärker zum Zeitpunkt der Abtastung in den Hold-Zustand wechseln. Somit kann der Analog-Digital-Wandler mittels des Multiplexers oder Umschalters die fest gehaltenen Strommesssignale nacheinander wandeln. Bei einer dritten Ausführung werden zwei Analog-Digital-Wandler und entsprechende Umschalter verwendet. Bei weiteren Ausführungen sind auch Mischformen ausführbar.

Beim ersten Verfahren wird vorteiligerweise ein symmetrisches Pulsweitenmodulations-Verfahren verwendet, wobei die Schaltfrequenz nicht höher als 20kHz gewählt ist und die oben beschriebene, maximale Aussteuerung nicht überschritten wird. Somit ist stets innerhalb einer Pulsweitenmodulations-Periode ein Pulsmuster vorhanden, bei dem in maximal einem Ausgangszweig ein solches Pulsweitenmodulations-Signal auftritt, dessen LOW-Zustand kürzer als die Mindestdauer währt. D.h., dass niemals in zwei Phasen gleichzeitig für weniger als die Mindestdauer beide Pulsweitenmodulations-Signale im LOW-Zustand sind. Für den Fall, dass der LOW-Zustand eines der Pulsweitenmodulations-Signale, beispielsweise $PWM_R(t)$, die Mindestdauer unterschreitet, ist trotzdem sicher gestellt, dass der Stromraumzeiger korrekt bestimmt wird. Denn die beiden anderen Pulsweitenmodulations-Signale, im Beispiel also $PWM_S(t)$ und $PWM_T(t)$, unterschreiten die Mindestdauer nicht. Somit ist bei der vorliegenden Erfindung immer ein korrektes Bestimmen des Stromraumzeigers gewährleistet, sofern bei der jeweiligen Art der Pulsweitenmodulations-Verfahren sicher gestellt ist, dass immer nur maximal ein Pulsweitenmodulations-Signal kürzer als die Mindestdauer im LOW-Zustand verweilt.

Bei einem zweiten erfindungsgemäßen Verfahren ist der in der Mitte der Pulsweitenmodulationsperiode liegende Messanstoß für $I_{TM}$ des ersten erfindungsgemäßen Verfahrens durch zwei Messanstöße ersetzt, die jeweils einen Zeitversatz $\Delta t$ aufweisen. Zuerst erfolgt dabei in sequentieller Weise der erste Messanstoß für $I_{TM}$, danach der für $I_{SM}$ und dann der zweite Messanstoß für $I_{TM}$. Vorteilhaft ist dabei, den Messanstoß für $I_{SM}$ in die Mitte der Pulsweitenmodulationsperiode zu legen. Der Zeitversatz $\Delta t$ ist möglichst klein, aber größer als die Analog-Digital-Wandler-Zeit zu wählen. Aus dem ersten und zweiten Stromabtastwert für $I_{TM}$ wird der Mittelwert gebildet und zur Bestimmung des Stromraumzeigers verwendet. Dieser so gebildete Mittelwert entspricht demjenigen fiktiven Stromabtastwert für $I_{TM}$, der gleichzeitig zur Erfassung des Stromabtastwertes $I_{SM}$ erfassbar wäre. Damit ist der auf diese Weise bestimmte Stromraumzeiger frei vom Einfluss des Stromripple. Denn bei der Verwendung von symmetrischen Pulsweitenmodulationsverfahren weist auch der Stromripple einen zur Mitte der Pulsweitenmodulationsperiode punktsymmetrischen Verlauf zur jeweiligen Strom-Funktionswert bei t=0.5 auf, wie auch in Figur 6 beispielhaft erkennbar ist. In Figur 6 liegt die Mitte der ersten Pulsweitenmodulationsperiode bei t=0.5 und der zweiten Pulsweitenmodulationsperiode bei t=1.5. Da also die beiden Stromabtastwerte $I_{TM}(t = 0.5 - \Delta t)$ und $I_{TM}(t = 0.5 + \Delta t)$ punktsymmetrisch zum Strom-Funktionswert $I_{TM}(t = 0.5)$ sind, gleicht der Mittelwert der beiden Stromabtastwerte $I_{TM}(t = 0.5 - \Delta t)$ und $I_{TM}(t = 0.5 + \Delta t)$ dem Strom-Funktionswert $I_{TM}(t = 0.5)$.

Auf diese Weise ist es ermöglicht, mit nur einem einzigen Analog-Digital-Wandler den Stromraumzeiger ohne Verfälschung durch Stromripple zu bestimmen. Da nämlich alle Stromabtastungen sequentiell ausführbar sind, sind zudem zusätzliche Sample-Hold-Schaltungen verzichtbar. Unter zusätzlichen Sample-Hold-Schaltungen sind nicht diejenigen Sample-Hold-Schaltungen zu verstehen, die fester Bestandteil bei gebräuchlichen Analog-Digital-Wandlern sind.

Auch beim zweiten Verfahren wird vorteiligerweise ein symmetrisches Pulsweitenmodulations-Verfahren verwendet, wobei die Schaltfrequenz vorteiligerweise nicht höher als 20kHz gewählt ist und die oben beschriebene, maximale Aussteuerung nicht überschritten wird. Somit ist wiederum stets innerhalb einer Pulsweitenmodulations-Periode ein Pulsmuster vorhanden, bei dem in maximal einem Ausgangszweig ein solches Pulsweitenmodulations-Signal auftritt, dessen LOW-Zustand kürzer als die Mindestdauer währt. Bei dem beim zweiten erfindungsgemäßen Verfahren verwendeten Pulsweitenmodulations-Verfahren ist stets mindestens ein Pulsweitenmodulations-Signal vorhanden, dessen LOW-Zustand länger als die Summe aus Mindestdauer und dem doppelten Zeitversatz, also 2*$\Delta t$, währt. Somit ist bei der vorliegenden Erfindung immer ein korrektes Bestimmen des Stromraumzeigers gewährleistet, sofern bei der jeweiligen Art der Pulsweitenmodulations-Verfahren sicher gestellt ist, dass die Pulsweitenmodulations-Signale eine ausreichende Pulsbreite aufweisen. Fiat-Top-Verfahren sind zwar symmetrische Pulsweitenmodulations-Verfahren im Allgemeinen aber nicht vorteilig bei kleinen Ausgangsspannungen verwendbar.

**Im Ausführungsbeispiel nach Figur 7 werden darüber hinaus in denjenigen Zeitabschnitten, in welchen bei idealisierter Betrachtung ein verschwindender Stromabtastwert zu erwarten ist, ein oder mehrere Stromabtastwerte erfasst. Idealisierte Betrachtung bedeutet hierbei, dass das Schaltverhalten ideal angenommen und die Einschwingzeit der Messverstärker vernachlässigt wird.**

**Beispielhaft ist in Figur 7 gezeigt, dass für die Phase R der Messwert $I_{RMoff}$ an zwei Zeitpunkten erfasst wird, wobei hierbei der Mittelwert der beiden erfassten Messwerte verwendet wird, und für die Phase S der Messwert $I_{SMoff}$. In der Phase T ist der Zeitbereich für ein störungsfreies Erfassen eines Strom-Offset-Messwertes zu kurz und es wird daher kein Strom-Offset-Messwert in denjenigen Zeitabschnitten erfasst, in welchen bei nicht idealisierter Betrachtung der Ausgangswert des Messverstärkers noch nicht auf den eigentlichen Strom-Offset-Messwert eingeschwungen ist.**

**Wenn sich in nachfolgenden Pulsweitenmodulationsperioden die in den einzelnen Phasen zu erzeugenden Spannungswerte ändern und somit auch in der Phase T ein r Zeitabschnitt auftritt, bei dem der Strom-Offset-Messwert für die Phase T ermittelbar ist, wird auch hier ein Strom-Offset-Messwert erfasst. Insbesondere bei einem zu erzeugenden Drehfeld wird - über einen entsprechenden Zeitraum betrachtet - in jeder der drei Phasen ein ausreichend aktueller Strom-Offset-Messwert erfasst.**

**Auf diese Weise ist der Offset der einzelnen Messverstärker der Sample-Hold-Schaltung bestimmbar. Bei der Stromerfassung wird dieser be-**

rücksichtigt, indem der jeweils aktuelle Offset-Wert vom erfassten Messwert subtrahiert wird. Es ergibt sich somit ein verbesserter Messwert und damit auch eine entsprechend verbesserte Regelung des Motors. Vorteiligerweise ist diese Offset-Bestimmung online ermöglicht, also während des ablaufenden Betriebs der Regelung. Es werden dabei nur zusätzliche Abtastungen der Phasenstromes ausgeführt, die keine wesentliche zusätzliche Belastung der Steuereinheit oder eine Verlangsamung des Steuer- und Regelverfahrens verursachen. Weiterer Vorteil ist auch, dass eine durch Temperaturanstieg verursachte Drift des Offsets kompensiert ist.

**Der Zeitpunkt des Abtastens des Strom-Offset-Messwerts hat mindestens 6 μs, vorzugsweise mindestens 8μs, Abstand von demjenigen vorausgehenden Zeitabschnitt, in welchem der zugehörige Brückenzweig eingeschaltet war. Auf diese Weise ist sichergestellt, dass Ein- und/oder Ausschwingvorgänge beendet sind und das Strommesssignal auf den Strom-Offset-Wert eingeschwungen ist.**

Vorzugsweise werden die Messwerte in der Phase R symmetrisch um den mittig liegenden Abtastzeitpunkt der Phase S herum erfasst.

In einem weiteren Ausführungsbeispiel wird statt der beiden Messungen in der Phase R nur ein einzelner Messwert erfasst, der nicht gleichzeitig mit dem Messwert der Phase S erfasst wird. Denn im Gegensatz zur weiter oben geschilderten Stromraumzeigererfassung, bei der ein Stromripple bei der Wahl der Abtastzeitpunkte zu berücksichtigen ist, ist bei der Bestimmung der Strom-Offset-Messwerte kein Stromripple vorhanden und die Zeitpunkte des Abtastens des Strom-Offset-Messwerts werden hierdurch nicht eingeschränkt.

In Weiterbildung wird als aktuell erfasster Offset-Wert ein gleitender Mittelwert einiger zuletzt erfassten Messwerte verwendet.

Bei der vorliegenden Erfindung werden also nur solche Pulsweitenmodulations-Verfahren verwendet, die in der Mitte Pulsweitenmodulations-Periode einen Schaltzustand derart aufweisen, dass mindestens zwei untere Schalter geschlossen sind.

In einem weiteren erfindungsgemäßen Ausführungsbeispiel werden die Stromabtastwerte nicht in derselben Pulsweitenmodulationsperiode bestimmt, sondern es wird der erste Stromabtastwert in einer ersten Pulsweitenmodulationsperiode erfasst und der zweite Stromabtastwert in einer der darauf folgenden Pulsweitenmodulationsperioden. Dabei ist wiederum nur ein einziger Analog-Digital-Wandler ohne zusätzliche Sample-Hold-Schaltung vorsehbar. Dies ist besonders vorteilhaft bei hoher Schaltfrequenz und somit also kurzen Pulsweitenmodulationsperioden. Dabei tritt keine Verfälschung durch Stromripple auf. Nur die in dieser Zeit vorkommende Änderung des Winkels des Stromraumzeigers kann Ursache für Verfälschungen werden. Die Auswahl des Paares erfolgt dabei gemäß Figur 8.

In Figur 4 sind Winkelbereiche 1 bis 6 eingezeichnet, die verschiedenen Winkelbereichen des Ausgangsspannungszeigers entsprechen. In der Figur 8 ist für jeden dieser Winkelbereiche das zu verwendende Paar durch gezackte Pfeile angegeben. Beispielsweise ist im Winkelbereich 1 nur S und T, also $I_{SM}$ und $I_{TM}$, zu verwenden. Im Winkelbereich 2 ist nur R und T, also $I_{RM}$ und $I_{TM}$, zu verwenden. **In denjenigen Winkelbereichen, in welchen in einer jeweiligen Phase keine Stromerfassung ausgeführt ist, ist die Erfassung des jeweiligen Offsetwertes vorgesehen. Dies ist in Figur 8 mit dem Eintrag $I_{RMoff}$, $I_{SMoff}$ und $I_{Tmoff}$ bezeichnet.**

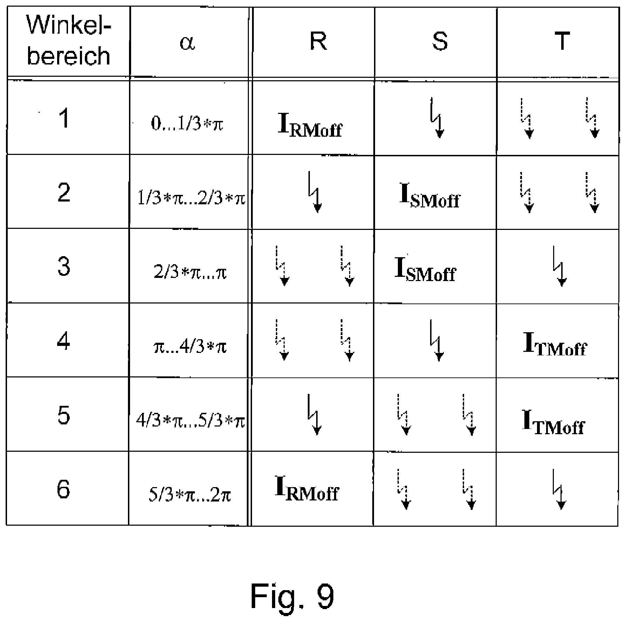

Wie oben beschrieben, wird bei dem zweiten erfindungsgemäßen Verfahren der symmetrisch in der Mitte der Pulsweitenmodulationsperiode liegende Messanstoß für einen Stromabtastwert des ersten erfindungsgemäßen Verfahrens durch zwei Messanstöße ersetzt, die jeweils einen Zeitversatz Δt aufweisen. Figur 9 zeigt, wie in Abhängigkeit von den Winkelbereichen des Ausgangsspannungsraumzeigers die Messanstöße durchzuführen sind. Es ist insbesondere dargestellt, in welcher Halbbrücke zwei Messanstöße und in welcher Halbbrücke der einzelne mittig liegende Messanstoß durchzuführen sind. Im Winkelbereich 1 erfolgt also ein erster Messanstoß für $I_{TM}$, danach ein einzelner, mittig liegender Messanstoß für $I_{SM}$ und zuletzt ein zweiter Messanstoß für $I_{TM}$. Die Messanstöße weisen dabei einen zeitlichen Abstand von Δt auf.

Im Winkelbereich 3 erfolgt also ein erster Messanstoß für $I_{RM}$, danach ein einzelner, mittig liegender Messanstoß für $I_{TM}$ und zuletzt ein zweiter Messanstoß für $I_{RM}$.

Für jeden Winkelbereich gibt es also eine Phase mit einem durchgezogen gezeichneten Blitz, was eine in der Mitte liegende Stromabtastung in dieser Phase bedeutet, und eine andere Phase mit zwei gestrichelt gezeichneten Blitzen, was eine doppelte Stromabtastung in dieser Phase bedeutet und zwar um den Zeitversatz Δt vor- und nach der Mitte. Es werden bei der vorliegenden Erfindung nur solche Pulsweitenmodulationsverfahren verwendet, deren Pulsmuster stets derart beschaffen ist, dass die unteren Schalter im jeweiligen Winkelbereich der mit Blitzen gekennzeichneten Phasen geschlossen sind in einem Zeitbereich um die jeweiligen Stromabtastungen herum. Bei der Phase mit zwei gestrichelt gezeichneten Blitzen ist der zugehörige untere Schalter von vor dem ersten Messanstoß bis nach dem zweiten Messanstoß geschlossen.

Kennzeichen der verwendbaren Pulsweitenmodulations-Verfahren ist, dass zumindest im Zeitpunkt der Mitte der Pulsweitenmodulations-Periode stets zwei untere Schalter geschlossen sind, wobei derjenige von diesen beiden unteren Schaltern, der zu der Phase mit der doppelten Stromabtastung zugeordnet ist, sogar mindestens eine Zeitspanne 2Δt geschlossen bleibt.

**Wiederum ist in denjenigen Winkelbereichen, in welchen in einer jeweiligen Phase keine Stromerfassung ausgeführt ist, die jeweilige Erfassung des Offsetwertes vorgesehen. Dies ist in Figur**

9 mit dem Eintrag $I_{RMoff}$, $I_{SMoff}$ und $I_{TMoff}$ gekennzeichnet. Somit sind die ansonsten ungenutzten Bereiche ausgenutzt für die Bestimmung des Offsetwertes der Stromerfassung, also der gesamten Mittel hierzu, wie Messverstärker, Multiplexer und Analog/Digital-Wandler.

Bei anderen erfindungsgemäßen Ausführungsbeispielen werden gemäß Figur 7 die beiden Stromabtastwerte des Strommesssignals $I_{TM}$ nicht symmetrisch um den Messanstoß zur Erfassung des stromabtastwertes des Strommesssignals $I_{SM}$ herum erfasst, also nicht mit Zeitabstand Δt vor und hinter der Erfassung von $I_{SM}$, sondern mit unterschiedlichen Zeitabständen. Dann wird statt des Mittelwertes ein interpolierter Wert gebildet, der die entsprechenden Zeitabstände berücksichtigt, wobei allerdings den Motor kennzeichnende Größen und auch die Art und Dauer der Schaltzustände beim Interpolieren zu berücksichtigen sind.

Bei anderen erfindungsgemäßen Ausführungsbeispielen werden statt der erwähnten zwei Stromabtastwerte mehr Stromabtastwerte erfasst. Darüber hinaus ist grundsätzlich jeder Stromabtastwert durch mehrere Stromabtastwerte ersetzbar. Somit ist eine weitere Verringerung von Messrauschen vorsehbar.

Bei weiteren erfindungsgemäßen Ausführungsbeispielen wird das Zeitverhalten der Verstärkerschaltungen $V_R$, $V_S$ und $V_T$ berücksichtigt, indem alle Messanstöße um die FilterZeitkonstante der Verstärkerschaltungen verzögert stattfinden. Die Filterzeitkonstante ist dabei kleiner als die halbe Mindestdauer.

Das Verfahren funktioniert auch bei höheren Pulsweitenmodulations-Frequenz als 20 kHz.

**Bezugzeichenliste:**

1 Steuer- und Regelvorrichtung
21 Sample-Hold-Schaltung
22 Mikrocontroller
23 Multiplexer

**Patentansprüche**

1. Verfahren zur Bestimmung eines Stromraumzeigers,
insbesondere zur Verwendung in einem Steuer- und/oder Regelverfahren,
bei einem pulsweitenmoduliert betriebenen Umrichter, umfassend eine Signalelektronik, eine Leistungsendstufe mit in drei, jeweils einen unteren und einen oberen Brückenzweig aufweisende Halbbrücken angeordneten Leistungsschaltern sowie in den drei oberen oder unteren Brückenzweigen der Halbbrücke angeordnete Mittel zur Abtastung der jeweiligen Ströme,
wobei

- zur Ansteuerung der Halbbrücken ein Pulsmuster innerhalb eines Zeitabschnitts, der eine Pulsweitenmodulationsperiode beträgt, derart generiert wird, dass zu einem ersten in der Pulsweitenmodulationsperiode liegenden Abtastzeitpunkt jeweils zumindest ein oberer oder ein unterer, mit Mitteln zur Abtastung des Stromes ausgestatteter Brückenzweig ausgeschaltet ist,
- in mindestens einem ausgeschalteten Brückenzweig mit den Mitteln zur Abtastung des Stromes mindestens ein Strom-Offset-Abtastwert zu dem ersten Abtastzeitpunkt bestimmt wird und daraus ein aktueller Offsetwert für die dem Brückenzweig zugehörige Stromerfassung bestimmt und danach berücksichtigt wird,

wobei der jeweilige ausgeschaltete Brückenzweig, in welchem der jeweilige Strom-Offset-Wert bestimmt wird, abhängig vom mittleren vom Umrichter an seinen Ausgangsphasen zu stellenden Ausgangsspannungsraumzeiger verschieden gewählt wird,
indem in demjenigen Brückenzweig, für den die zu erwartende Zeitspanne für einen verschwindenden Stromabtastwert zu kurz ist, um ein störungsfreies Erfassen auszuführen, kein Offset-Wert ermittelt wird, und erst bei einem entsprechend veränderten mittleren Ausgangsspannungsraumzeiger ein Offset-Wert ermittelt wird, also bei einer dann für ein störungsfreies Erfassen ausreichend langen Zeitspanne für einen verschwindenden Stromabtastwert,
wobei aus den in eingeschalteten Brückenzweigen bestimmten Stromabtastwerten der Stromraumzeiger bestimmt wird, wobei der mittlere Ausgangsspannungsraumzeiger bestimmt ist durch die Differenzen der über eine Pulsweitenmodulationsperiode gemittelten Ausgangspotentiale der drei Ausgangsphasen,
**dadurch gekennzeichnet, dass**
in einem weiteren ausgeschalteten Brückenzweig zeitlich symmetrisch um den ersten Abtastzeitpunkt liegende Stromabtastwerte erfasst werden zur Bestimmung des Offsetwerts, wobei also einer der Stromabtastwerte vor und ein anderer nach dem ersten Abtastzeitpunkt erfasst wird.

2. Verfahren nach Anspruch 1,
**dadurch gekennzeichnet, dass**

- zur Ansteuerung der Halbbrücken ein symmetrisches Pulsmuster innerhalb eines Zeitabschnitts, der eine Pulsweitenmodulationsperiode beträgt, derart generiert wird, dass zu einem weiteren mittig in der Pulsweitenmodulationsperiode liegenden Abtastzeitpunkt jeweils ein Paar der drei oberen oder ein Paar der drei unteren, mit Mitteln zur Abtastung des Stromes ausgestatteten Brückenzweige eingeschaltet sind,
- in jedem der beiden eingeschalteten Brückenzweige mit den Mitteln zur Abtastung des Stromes mindestens ein Stromabtastwert bestimmt wird,
- das Paar von eingeschalteten Brückenzweigen abhängig vom mittleren Ausgangsspannungsraumzeiger verschieden gewählt wird und
- aus den Stromabtastwerten der Stromraumzeiger bestimmt wird, wobei der mittlere Ausgangsspannungsraumzeiger bestimmt ist durch die Differenzen der über eine Pulsweitenmodulationsperiode gemittelten Ausgangspotentiale der drei Ausgangsphasen.

3. Verfahren nach mindestens einem der vorangegangenen Ansprüche,
   **dadurch gekennzeichnet, dass**
   der erste Abtastzeitpunkt mittig in einem Zeitabschnitt liegt, währenddessen der jeweilige Brückenzweig ausgeschaltet ist.

4. Verfahren nach mindestens einem der vorangegangenen Ansprüche,
   **dadurch gekennzeichnet, dass**
   mehrere erste Abtastzeitpunkte in jeweils einem Zeitabschnitt liegen und der Mittelwert der erfassten Strommesswerte zur Bestimmung des Offsetwerts verwendet wird.

5. Verfahren nach Anspruch 1 oder 2,
   **dadurch gekennzeichnet, dass**
   der erste Abtastzeitpunkt im Endbereich desjenigen Zeitabschnitts liegt, währenddessen der jeweilige Brückenzweig ausgeschaltet ist.

6. Verfahren nach Anspruch 5,
   **dadurch gekennzeichnet, dass**
   die Abtastzeitpunkte der verschiedenen Phasen zu verschiedenen Zeitpunkten gewählt werden.

7. Verfahren nach mindestens einem der vorangegangenen Ansprüche,
   **dadurch gekennzeichnet, dass**
   mit dem Mittel des zweiten Brückenzweiges **ein**es Paares ein erster und ein zweiter zugehöriger Stromabtastwert zeitlich vor und nach dem Erfassen eines mit dem Mittel des ersten Brückenzweiges des Paares erfassten Stromabtastwertes vorgesehen ist

8. Verfahren nach Anspruch 7,
   **dadurch gekennzeichnet, dass**
   das Paar abhängig vom Winkel des Ausgangsspannungsraumzeigers verschieden ausgewählt wird

9. Verfahren nach mindestens einem der vorangegangenen Ansprüche,
   **dadurch gekennzeichnet, dass**

die Stromabtastwerte mit Mitteln bestimmt werden, die mit dem unteren oder mit dem oberen Zwischenkreispotential verbunden sind.

10. Verfahren nach mindestens einem der vorangegangenen Ansprüche,
    **dadurch gekennzeichnet, dass**
    ein Bezugspotential der Signalelektronik einem Bezugspotential entspricht, auf welchem die Strommesssignale liegen und/oder die Stromabtastwerte erfasst werden.

11. Verfahren nach mindestens einem der vorangegangenen Ansprüche,
    **dadurch gekennzeichnet, dass**
    das Erfassen eines Stromabtastwertes um die Filterzeitkonstante versetzt zur Mitte desjenigen Zustandes der Pulsweitenmodulationsperiode erfolgt, bei dem der im gleichen Zweig wie das zugehörige Strommessmittel angeordnete Leistungsschalter leitend ist.

12. Verfahren nach Anspruch 8 oder 7,
    **dadurch gekennzeichnet, dass**
    das zweite Mittel des Paares dasjenige Mittel ist, bei welchem der während der jeweiligen Pulsweitenmodulations-Periode am längsten dauernde Leitendzustand von den drei unteren Leistungsschaltern auftritt, sofern die Strommessmittel in den drei unteren Zweigen angeordnet sind,
    und dass das erste Mittel des Paares dasjenige Mittel ist, bei welchem der während der jeweiligen Pulsweitenmodulations-Periode am zweitlängsten dauernde Leitendzustand von den drei unteren Leistungsschaltern auftritt,
    oder dass
    das zweite Mittel des Paares dasjenige Mittel ist, bei welchem der während der jeweiligen Pulsweitenmodulations-Periode am längsten dauernde Leitendzustand von den drei oberen Leistungsschaltern auftritt, sofern die Strommessmittel in den drei oberen Zweigen angeordnet sind,
    und dass das erste Mittel des Paares dasjenige Mittel ist, bei welchem der während der jeweiligen Pulsweitenmodulations-Periode am zweitlängsten dauernde Leitendzustand von den drei oberen Leistungsschaltern auftritt.

13. Verfahren nach mindestens einem der vorangegangenen Ansprüche,
    **dadurch gekennzeichnet, dass**
    mit beiden Mitteln mehr als einmal pro Pulsweitenmodulationsperiode ein Stromabtastwert erfasst wird und/oder mehr als ein Messanstoß innerhalb einer Pulsweitenmodulationsperiode vorgesehen ist.

14. Verfahren nach mindestens einem der vorangegangenen Ansprüche,
**dadurch gekennzeichnet, dass**
aus den erfassten Stromabtastwerten ein gemäß den Zeitpunkten der jeweiligen Erfassung interpolierter Wert und/oder Mittelwert gebildet wird als Strommesswert zur Bestimmung des Stromraumzeigers.

15. Verfahren zur Bestimmung eines Stromraumzeigers nach Anspruch 1 wobei

- entweder in allen drei unteren oder in allen drei oberen Zweigen der Halbbrücken Mittel zur Erfassung der jeweiligen Ströme angeordnet sind,
- innerhalb eines Zeitabschnitts, der zwei Pulsweitenmodulationsperioden beträgt, mit zwei der drei Mittel zur Erfassung der Ströme jeweils mindestens ein zugehöriger Stromabtastwert bestimmt wird und in beiden Pulsweitenmodulationsperioden derselbe mittlere Ausgangsspannungsraumzeigers ausgegeben wird,
- mit einem ersten Mittel des Paares ein erster Stromabtastwert in der Mitte der ersten der zwei Pulsweitenmodulationsperioden erfasst wird und
mit einem zweiten Mittel des Paares ein zugehöriger Stromabtastwert in der Mitte der zweiten, also unmittelbar nachfolgenden Pulsweitenmodulationsperiode erfasst wird,
- aus den mit diesem Paar von Mitteln bestimmten Stromabtastwerten ein Stromraumzeiger gebildet wird oder die Stromwerte in den Ausgangszweigen gebildet werden, und
- dieses Paar von Mitteln abhängig vom mittleren Ausgangsspannungsraumzeiger verschieden ausgewählt wird,

16. Verfahren zur Bestimmung eines Stromraumzeigers nach Anspruch 1 wobei

- entweder in allen drei unteren oder in allen drei oberen Zweigen der Halbbrücken Mittel zur Erfassung der jeweiligen Ströme angeordnet sind,
- innerhalb eines Zeitabschnitts, der eine Pulsweitenmodulationsperiode beträgt, mit zwei der drei Mittel zur Erfassung der Ströme jeweils mindestens ein zugehöriger Stromabtastwert bestimmt wird,
- mit einem zweiten Mittel des Paares ein erster und ein zweiter zugehöriger Stromabtastwert zeitlich vor und nach dem Erfassen eines mit einem ersten Mittel des Paares erfassten Stromabtastwertes vorgesehen ist,
- aus den mit diesem Paar von Mitteln bestimmten Stromabtastwerten ein Stromraumzeiger gebildet wird oder die Stromwerte in den Ausgangszweigen gebildet werden, und
- dieses Paar von Mitteln abhängig vom mittleren Ausgangsspannungsraumzeiger verschieden ausgewählt wird.

**Claims**

1. Method for determining a current space vector, in particular for use in a control and/or regulation method, in a converter operated with pulse width modulation, comprising signal electronics, a power output stage with power switches arranged in three half-bridges having in each case a lower and an upper bridge branch, and means for sampling the respective currents, said means being arranged in the three upper or lower bridge branches of the half-bridge, wherein

- in order to actuate the half-bridges, a pulse pattern is generated within a time segment, which is one pulse-width modulation period, such that in each case at least one upper or one lower bridge branch equipped with means for sampling the current is switched off at a first sampling instant situated in the pulse-width modulation period,
- in at least one switched-off bridge branch, at least one current offset sampling value is determined at the first sampling instant by the means for sampling the current, and an up-to-date offset value for the current detection associated with the bridge branch is determined therefrom and is thereafter taken into account,

wherein the respective switched-off bridge branch, in which the respective current offset value is determined, is selected differently depending on the average output voltage space vector to be set by the converter at its output phases, wherein no offset value is determined in that bridge branch for which the period of time to be expected for a vanishing current sampling value is too short to carry out interference-free detection, and an offset value is determined only for a correspondingly changed average output voltage space vector, that is to say for a period of time for a vanishing current sampling value that is sufficiently long for interference-free detection, wherein the current space vector is determined from the current sampling values determined in switched-on bridge branches, the average output voltage space vector being determined from the differences between the output potentials of the three output phases averaged over a pulse-width modulation period,
**characterized in that**
current sampling values situated temporally symmetrically around the first sampling instant are detected in a further switched-off bridge branch in order to determine the offset value, one of the current sampling values therefore being detected before and another after the first sampling instant.

2. Method according to claim 1, **characterized in that**

- in order to actuate the half-bridges, a symmetrical pulse pattern is generated within a time segment, which is one pulse-width modulation period, such that in each case a pair of the three upper or a pair of the three lower bridge branches equipped with means for sampling the current are switched on at a further sampling instant situated in the middle of the pulse-width modulation period,
- in each of the two switched-on bridge branches, at least one current sampling value is determined by the means for sampling the current,
- the pair of switched-on bridge branches is selected differently depending on the average output voltage space vector, and
- the current space vector is determined from the current sampling values, the average output voltage space vector being determined from the differences between the output potentials of the three output phases averaged over a pulse-width modulation period.

3. Method according to at least one of the preceding claims, **characterized in that** the first sampling instant is situated in the middle of a time segment during which the respective bridge branch is switched off.

4. Method according to at least one of the preceding claims, **characterized in that** a plurality of first sampling instants are situated in a respective time segment and the average value of the detected current measured values is used to determine the offset value.

5. Method according to claim 1 or 2, **characterized in that** the first sampling instant is situated in the end region of that time segment during which the respective bridge branch is switched off.

6. Method according to claim 5, **characterized in that** the sampling instants of the different phases are selected at different instants.

7. Method according to at least one of the preceding claims, **characterized in that** a first and a second associated current sampling value is provided by the means of the second bridge branch of a pair temporally before and after the detection of a current sampling value that is detected by the means of the first bridge branch of the pair.

8. Method according to claim 7, **characterized in that** the pair is selected differently depending on the angle of the output voltage space vector.

9. Method according to at least one of the preceding claims, **characterized in that** the current sampling values are determined by means which are connected to the lower or to the upper intermediate circuit potential.

10. Method according to at least one of the preceding claims, **characterized in that** a reference potential of the signal electronics corresponds to a reference potential at which the current measurement signals lie and/or the current sampling values are detected.

11. Method according to at least one of the preceding claims, **characterized in that** the detection of a current sampling value takes place in a manner offset by the filter time constant from the middle of that state of the pulse-width modulation period in which the power switch arranged in the same branch as the associated current measuring means is conducting.

12. Method according to claim 8 or 7, **characterized in that** the second means of the pair is that means in which the longest conducting state of the three lower power switches occurs during the respective pulse-width modulation period if the current measuring means are arranged in the three lower branches, and **in that** the first means of the pair is that means in which the second-longest conducting state of the three lower power switches occurs during the respective pulse-width modulation period, or **in that** the second means of the pair is that means in which the longest conducting state of the three upper power switches occurs during the respective pulse-width modulation period if the current measuring means are arranged in the three upper branches, and **in that** the first means of the pair is that means in which the second-longest conducting state of the three upper power switches occurs during the respective pulse-width modulation period.

**13.** Method according to at least one of the preceding claims,
**characterized in that**
a current sampling value is detected by both means more than once per pulse-width modulation period, and/or more than one measurement trigger is provided within one pulse-width modulation period.

**14.** Method according to at least one of the preceding claims,
**characterized in that**,
from the detected current sampling values, a value interpolated according to the instants of the respective detection and/or an average value is formed as a current measured value for determining the current space vector.

**15.** Method for determining a current space vector according to claim 1,
wherein

- means for detecting the respective currents are arranged either in all three lower branches or in all three upper branches of the half-bridges,
- within a time segment which is two pulse-width modulation periods, in each case at least one associated current sampling value is determined by two of the three means for detecting the currents, and the same average output voltage space vector is output in both pulse-width modulation periods,
- a first current sampling value is detected in the middle of the first of the two pulse-width modulation periods by a first means of the pair and an associated current sampling value is detected in the middle of the second pulse-width modulation period, that is to say the immediately subsequent pulse-width modulation period, by a second means of the pair,
- from the current sampling values determined by said pair of means, a current space vector is formed or the current values in the output branches are formed, and
- said pair of means is selected differently depending on the average output voltage space vector.

**16.** Method for determining a current space vector according to claim 1,
wherein

- means for detecting the respective currents are arranged either in all three lower branches or in all three upper branches of the half-bridges,
- within a time segment which is one pulse-width modulation period, in each case at least one associated current sampling value is determined by two of the three means for detecting the currents,
- a first and a second associated current sampling value is provided by a second means of the pair temporally before and after the detection of a current sampling value that is detected by a first means of the pair,
- from the current sampling values determined by said pair of means, a current space vector is formed or the current values in the output branches are formed, and
- said pair of means is selected differently depending on the average output voltage space vector.

**Revendications**

**1.** Procédé pour déterminer un vecteur spatial de courant,
en particulier destiné à être utilisé dans un procédé de commande et/ou de régulation dans un convertisseur fonctionnant en modulation de largeur d'impulsion, comprenant une électronique de signalisation, un étage final de puissance avec des commutateurs de puissance disposés dans trois demi-ponts présentant chacun une branche de pont inférieure et une branche de pont supérieure, ainsi que des moyens d'échantillonnage des courants respectifs disposés dans les trois branches de pont supérieures ou inférieures des demi-ponts,
dans lequel

- pour commander les demi-ponts, un motif d'impulsions est généré dans une période de temps qui correspond à une période de modulation de largeur d'impulsion, de telle sorte qu'à un premier instant d'échantillonnage situé dans la période de modulation de largeur d'impulsion, chaque fois au moins une branche de pont supérieure ou une branche de pont inférieure équipée de moyens d'échantillonnage du courant est désactivée,
- au moins une valeur d'échantillonnage de décalage de courant est déterminée dans au moins une branche de pont désactivée avec les moyens d'échantillonnage du courant au premier instant d'échantillonnage, et, à partir de celle-ci, une valeur de décalage actuelle pour la détection de courant associée à la branche de pont est déterminée et ensuite prise en compte,

dans lequel la branche de pont désactivée respective, dans lequel la valeur de décalage de courant respective est déterminée, est sélectionnée différemment en fonction du vecteur spatial de tension de sortie moyen que le convertisseur doit fournir à ses phases de sortie,
aucune valeur de décalage n'étant déterminée dans la branche de pont pour laquelle l'intervalle de temps à attendre pour une valeur d'échantillonnage de courant infinitésimale est trop court pour effectuer une détection sans perturbations, et une valeur de décalage étant déterminée uniquement dans le cas d'un vecteur spatial de tension de sortie moyen modifié de manière appropriée, c'est-à-dire lorsqu'un intervalle de temps pour une valeur d'échantillonnage de courant infinitésimale est suffisamment long pour une détection sans perturbations,

dans lequel le vecteur spatial de courant est déterminé à partir des valeurs d'échantillonnage de courant déterminées dans les branches de pont activées, le vecteur spatial de tension de sortie moyen étant déterminé par les différences des potentiels de sortie des trois phases de sortie moyennés sur une période de modulation de largeur d'impulsion, **caractérisé en ce que** dans une autre branche de pont désactivée, des valeurs d'échantillonnage de courant sont détectées symétriquement dans le temps autour du premier instant d'échantillonnage pour déterminer la valeur de décalage, c'est-à-dire qu'une des valeurs d'échantillonnage est détectée avant et une autre après le premier instant d'échantillonnage.

2. Procédé selon la revendication 1,
**caractérisé en ce que**

- pour commander les demi-ponts, un motif d'impulsions symétrique est généré dans une période de temps qui correspond à une période de modulation de largeur d'impulsion, de telle sorte qu'à un autre instant d'échantillonnage situé au milieu de la période de modulation de largeur d'impulsion, chaque fois une paire des trois branches de pont supérieures ou une paire des trois branches de pont inférieures équipées de moyens d'échantillonnage du courant sont activées,
- au moins une valeur d'échantillonnage de courant est déterminée dans chacune des deux branches de pont activées avec les moyens d'échantillonnage du courant,
- la paire de branches de pont activée est choisie différemment en fonction du vecteur spatial de tension de sortie moyen et
- le vecteur spatial de courant est déterminé à partir des valeurs d'échantillonnage de courant, le vecteur spatial de tension de sortie moyen étant déterminé par les différences des potentiels de sortie des trois phases de sortie moyennées sur une période de modulation de largeur d'impulsion.

3. Procédé selon au moins l'une des revendications précédentes,
**caractérisé en ce que**

le premier instant d'échantillonnage est situé au milieu d'une période de temps pendant laquelle la branche de pont respective est désactivée.

4. Procédé selon au moins l'une des revendications précédentes,
**caractérisé en ce que**
plusieurs premiers instants d'échantillonnage sont situés dans une période de temps respective et la valeur moyenne des valeurs de mesure de courant détectées est utilisée pour déterminer la valeur de décalage.

5. Procédé selon la revendication 1 ou 2,
**caractérisé en ce que**
le premier instant d'échantillonnage est situé dans la partie finale de la période de temps pendant laquelle la branche de pont respective est désactivée.

6. Procédé selon la revendication 5,
**caractérisé en ce que**
les instants d'échantillonnage des différentes phases sont choisis à des instants différents.

7. Procédé selon au moins l'une des revendications précédentes,
**caractérisé en ce que**
une première et une deuxième valeur d'échantillonnage de courant sont prévues avec le moyen de la deuxième branche de pont d'une paire avant et après la détection d'une valeur d'échantillonnage de courant détectée avec le moyen de la première branche de pont de la paire.

8. Procédé selon la revendication 7,
**caractérisé en ce que**
la paire est sélectionnée différemment en fonction de l'angle du vecteur spatial de tension de sortie.

9. Procédé selon au moins l'une des revendications précédentes,
**caractérisé en ce que**
les valeurs d'échantillonnage de courant sont déterminées avec des moyens qui sont reliés au potentiel de circuit intermédiaire inférieur ou supérieur.

10. Procédé selon au moins l'une des revendications précédentes,
**caractérisé en ce que**
un potentiel de référence de l'électronique de signalisation correspond à un potentiel de référence auquel les signaux de mesure de courant se trouvent et/ou les valeurs d'échantillonnage de courant sont détectées.

11. Procédé selon au moins l'une des revendications précédentes,
**caractérisé en ce que**

la détection d'une valeur d'échantillonnage de courant est décalée de la constante de temps du filtre par rapport au milieu de l'état de la période de modulation de largeur d'impulsion dans lequel le commutateur de puissance disposé dans la même branche que le moyen de mesure de courant associés est conducteur.

**12.** Procédé selon la revendication 8 ou 7, **caractérisé en ce que**
le deuxième moyen de la paire est le moyen auquel se produit l'état conducteur le plus long des trois commutateurs de puissance inférieurs pendant la période de modulation de largeur d'impulsion respective, si les moyens de mesure de courant sont disposés dans les trois branches inférieures, et que le premier moyen de la paire est le moyen auquel se produit le deuxième état conducteur le plus long des trois commutateurs de puissance inférieurs pendant la période de modulation de largeur d'impulsion respective, ou que le deuxième moyen de la paire est le moyen auquel se produit l'état conducteur le plus long des trois commutateurs de puissance supérieurs pendant la période de modulation de largeur d'impulsion respective, si les moyens de mesure de courant sont disposés dans les trois branches supérieures, et que le premier moyen de la paire est le moyen auquel se produit le deuxième état conducteur le plus long des trois commutateurs de puissance supérieurs pendant la période de modulation de largeur d'impulsion respective.

**13.** Procédé selon au moins l'une des revendications précédentes, **caractérisé en ce que**
une valeur d'échantillonnage de courant est détectée plus d'une fois par période de modulation de largeur d'impulsion avec les deux moyens et/ou plus d'une impulsion de mesure est prévue dans une période de modulation de largeur d'impulsion.

**14.** Procédé selon au moins l'une des revendications précédentes, **caractérisé en ce que**
à partir des valeurs d'échantillonnage de courant détectées, une valeur interpolée selon les instants de la détection respective et/ou une valeur moyenne est formée en tant que valeur de mesure de courant pour déterminer le vecteur spatial de courant.

**15.** Procédé de détermination d'un vecteur spatial de courant selon la revendication 1, dans lequel

- des moyens pour détecter les courants respectifs sont disposés dans les trois branches inférieures ou les trois branches supérieures des demi-ponts,
- dans une période de temps qui correspond à deux périodes de modulation de largeur d'impulsion, chaque fois au moins une valeur d'échantillonnage de courant associée est déterminée avec deux des trois moyens de détection des courants et le même vecteur spatial de tension de sortie moyen est délivré dans les deux périodes de modulation de largeur d'impulsion,
- une première valeur d'échantillonnage de courant est détectée au milieu de la première des deux périodes de modulation de largeur d'impulsion avec un premier moyen de la paire, et une valeur d'échantillonnage de courant associée est détectée au milieu de la deuxième, donc immédiatement suivante, période de modulation de largeur d'impulsion avec un deuxième moyen de la paire,
- un vecteur spatial de courant est formé à partir des valeurs d'échantillonnage de courant déterminées avec cette paire de moyens ou les valeurs de courant dans les branches de sortie sont formées, et
- cette paire de moyens est sélectionnée différemment en fonction du vecteur spatial de tension de sortie moyen.

**16.** Procédé pour déterminer un vecteur spatial de courant selon la revendication 1, dans lequel

- des moyens pour détecter les courants respectifs sont disposés dans les trois branches inférieures ou les trois branches supérieures des demi-ponts,
- dans une période de temps qui correspond à une période de modulation de largeur d'impulsion, chaque fois au moins une valeur d'échantillonnage de courant associée est déterminée avec deux des trois moyens de détection des courants,
- une première et une deuxième valeur d'échantillonnage de courant sont prévues avec un deuxième moyen de la paire avant et après la détection d'une valeur d'échantillonnage de courant détectée avec un premier moyen de la paire,
- un vecteur spatial de courant est formé à partir des valeurs d'échantillonnage de courant déterminées avec cette paire de moyens ou les valeurs de courant dans les branches de sortie sont formées, et
- cette paire de moyens est sélectionnée différemment en fonction du vecteur spatial de tension de sortie moyen.

Fig. 1

Fig. 2

Fig. 3

Fig. 4

EP 2 263 303 B1

Fig. 5

Fig. 6

## Fig. 7

| Winkel-bereich | $\alpha$ | R | S | T |
|---|---|---|---|---|
| 1 | $0...1/3*\pi$ | $I_{Rmoff}$ | $\downarrow$ | $\downarrow$ |
| 2 | $1/3*\pi...2/3*\pi$ | $\downarrow$ | $I_{Smoff}$ | $\downarrow$ |
| 3 | $2/3*\pi...\pi$ | $\downarrow$ | $I_{Smoff}$ | $\downarrow$ |
| 4 | $\pi...4/3*\pi$ | $\downarrow$ | $\downarrow$ | $I_{Tmoff}$ |
| 5 | $4/3*\pi...5/3*\pi$ | $\downarrow$ | $\downarrow$ | $I_{Tmoff}$ |
| 6 | $5/3*\pi...2\pi$ | $I_{Rmoff}$ | $\downarrow$ | $\downarrow$ |

# Fig. 8

| Winkel-bereich | α | R | S | T |
|---|---|---|---|---|
| 1 | $0...1/3*\pi$ | $\mathbf{I}_{RMoff}$ | | |
| 2 | $1/3*\pi...2/3*\pi$ | | $\mathbf{I}_{SMoff}$ | |
| 3 | $2/3*\pi...\pi$ | | $\mathbf{I}_{SMoff}$ | |
| 4 | $\pi...4/3*\pi$ | | | $\mathbf{I}_{TMoff}$ |
| 5 | $4/3*\pi...5/3*\pi$ | | | $\mathbf{I}_{TMoff}$ |
| 6 | $5/3*\pi...2\pi$ | $\mathbf{I}_{RMoff}$ | | |

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19681189 T1
- US 5815391 A
- GB 2437696 A
- WO 03041256 A2
- WO 2009127313 A2

**In der Beschreibung aufgeführte Nicht-Patentliteratur**

- Low cost current Sensing in DSP Based Drives. **FRANCESCO PARASILITI.** Industrial Electronics, 1999, ISIE'99, Proceedings of the IEEE, Volume 3, 1999. International Symposium, 1999, vol. 3